# EUROPEAN PATENT SPECIFICATION

(11) **EP 4 202 352 B1**
(45) Date of publication and mention of the grant of the patent: **27.08.2025**
(21) Application number: 21216600.3
(22) Date of filing: 21.12.2021
(51) Int. Cl.: G01B 5/00, G01B 21/04, G01B 21/32

(54) **COORDINATE MEASURING SYSTEM**
KOORDINATENMESSSYSTEM
SYSTÈME DE MESURE DE COORDONNÉES

(43) Date of publication of application: 28.06.2023
(73) Proprietor: Hexagon Technology Center GmbH, 9435 Heerbrugg (CH)
(72) Inventor: ISELI, Claudio, 9434 Au (CH); VALPERTZ, Frank, 57489 Drolshagen (DE)
(74) Representative: Kaminski Harmann

(56) References cited:
- EP-B1- 2 742 316
- US-A1- 2021 191 359
- SCHMITT R H ET AL: "Advances in Large-Scale Metrology - Review and future trends", CIRP ANNALS, ELSEVIER BV, NL, CH, FR, vol. 65, no. 2, 20 June 2016 (2016-06-20), pages 643 - 665, XP029690805, ISSN: 0007-8506, DOI: 10.1016/J.CIRP.2016.05.002

## Description

The present invention generally pertains to a coordinate measuring system for determining spatial coordinates of measurement points on an object. The system comprises a coordinate measuring device, e.g. embodied as a coordinate measuring machine (CMM), one or more temperature sensors for determining temperatures of the object measured by the coordinate measuring device, and a thermal compensation functionality that allows compensating temperature-induced distortions of the measured object and/or predicting dimensions of the same object at a pre-defined temperature.

It is common practice to inspect a workpiece after its production to determine the accuracy of the production process, that is, workpiece dimensions, correctness of angles, etc. For instance, such a measurement can be performed using a CMM. For inspection, the workpiece is put on a base of such a CMM and a probe head being movable relative to the base is guided to predetermined measurement points of the workpiece to obtain the exact coordinate data of these points. Thus, it is possible to determine the production accuracy of the workpiece.

In a conventional CMM - e.g. as disclosed in EP 2 270 425 A1 - the probe head is supported for movement along three mutually perpendicular axes (in directions X, Y and Z). Thereby, the probe head can be guided to any arbitrary point within a working volume of the coordinate measuring machine. In order to determine the coordinates, known measurement means capable to determine the probe head's distance from a known point of origin are employed. For instance, scales or other suitable measuring means are used for this purpose. The obtained coordinate data can then be stored in a memory such as a RAM and used for further processing.

Coordinate measuring devices for inspecting workpieces during or after production comprise laser trackers, for instance as disclosed in EP 2 980 526 A1. Laser trackers are measuring devices that are typically used in industrial surveying and are designed for progressive tracking of a target point and a coordinate position determination of this point. A target point can be represented in this case by a retroreflective unit (e.g. a cube prism), which is targeted using an optical measurement beam of the measuring device, in particular a laser beam. The laser beam is reflected in parallel back to the laser tracker, wherein the reflected beam is captured using a capture unit of the device. An emission or reception direction of the beam is ascertained in this case, for example, by means of sensors for angle measurement, which are associated with a deflection mirror or a targeting unit of the system. In addition, a distance from the measuring device to the target point is ascertained with the capture of the beam, for example, by means of runtime or phase difference measurement or by means of the Fizeau principle. Laser trackers additionally may comprise an optical image capture unit having a two-dimensional, light-sensitive array, for example, a CCD or CID camera or a camera based on a CMOS array, or having a pixel array sensor and having an image processing unit. The laser tracker and the camera can be installed one on top of another in this case, in particular in such a manner that the positions thereof in relation to one another are not variable. The camera is, for example, rotatable together with the laser tracker about its essentially perpendicular axis, but is pivotable up-and-down independently of the laser tracker and is therefore arranged separately from the optics system of the laser beam in particular. Furthermore, the camera - for example, in dependence on the respective application - can be embodied as pivotable about only one axis. In alternative embodiments, the camera can be installed in an integrated construction together with the laser optic in a shared housing. With the capture and analysis of an image - by means of image capture and image processing unit - of a so-called measuring aid instrument having markings, the relative locations of which to one another are known, an orientation of an object (for example, a probe), which is arranged on the measuring aid instrument, in space can be concluded. Together with the determined spatial position of the target point, furthermore the position and orientation of the object in space can be precisely determined absolutely and/or in relation to the laser tracker.

Workpieces that need to be measured precisely can have an inhomogeneous temperature distribution that also can differ significantly from that of the measuring machine and its surroundings. Also, the temperature distribution changes over time and is also dependent on the type of fixation. For instance, basically identical workpieces that are to be measured in a CMM or by a laser tracker after being produced can have different temperature distributions, due to different storage or transport conditions or distinct process influences. Moreover, these temperature distributions usually differ from the nominal conditions of the workpiece design. In most cases, the design envisages a homogeneous temperature distribution with a "normal temperature" of, e.g., 20° C.

Deviations from this homogeneous normal temperature influence dimensional measurements on the workpiece due to temperature-influence including local or overall deformations (e.g. expansions). Conventionally, in order to eliminate this influence, workpieces may be tempered to the pre-defined normal temperature. Local workpiece expansions due to the influence of temperature are thus eliminated during measurements in a CMM or by a laser tracker. However, this conventional approach has the disadvantage of a long waiting time until the temperatures in the workpiece are equalized to the normal temperature. This adjustment time depends, amongst other things, on the initial temperatures in the workpiece and on the heat inertia of the workpiece - or of different heat inertias due to different materials used for different parts of the workpiece. Since tempering a workpiece may thus take a long time before a measurement can be made, it would be desirable to reduce the waiting time and thus the overall time between production and inspection of a workpiece sample.

If the temperature expansion state of a workpiece would be known, tempering the workpiece would not be necessary. Then, during the measurement, for each measuring point on the workpiece, the temperature expansion can be taken into account and compensated in the measurement result, i.e. providing the temperature-dependent expansion relative to normal temperature.

Some CMMs follow a different approach, wherein the workpiece is clamped on the machine and a temperature sensor is attached to the workpiece at a defined point or measurements are performed at individual points with a temperature sensor controlled by the CMM. Using these sensor values, an average value is formed for a specific point in time. Based on this, and assuming a homogeneous temperature in the workpiece, the measurements may be calculated back to a normal temperature. The main disadvantage of this method arises from the "homogeneous view" of the workpiece which - especially if the workpiece consists of more than one material - rarely corresponds to reality. Also, effects from local heat outflow (or inflow) are ignored. Consequently, this form of compensation can only be used for low precision applications. It would be desirable to have a solution which avoids these disadvantages and can be used for highly precise measurements.

An example for a thermal imaging temperature sensor for use in a CMM to determine a temperature of a workpiece is disclosed in EP 546 784 A2.

CN 108 296 877 A generally discloses the application of thermal expansion coefficients for machine tools. Temperatures of workpieces are monitored during machining, and actual thermal expansion coefficients are calculated by combining theoretical values and actual detected workpiece sizes. However, this approach is not configured for measuring applications and does not include internal or residual stresses in the workpiece due to fixation of the workpiece. US 9,739,606 B2 discloses a CMM for inspecting a multitude of workpieces thereby correcting temperature variations by measuring temperatures of a master piece. This approach has the disadvantages that in order to work, the process needs to be exactly the same for each workpiece and all workpieces need to have exactly the same properties regarding temperature distribution.

In other prior art, R.H. Schmitt et al./CIRP Annals - Manufacturing Technology 65 (2016) 643-665 (also available as XP029690805) discusses large-scale metrology, including influences on the object under measurement, such as due to temperature changes.

It is therefore an object of the present invention to provide a coordinate measuring system and a method that reduce the time for preparing a workpiece for measuring.

It is another object to provide such a system and method that allow determining workpiece coordinates with high precision. It is another object to provide such a system and method that allow taking thermal expansion coefficients of the workpieces into consideration.

At least one of these objects is achieved by the coordinate measuring system according to claim 1, the method according to claim 11 and/or the dependent claims of the present invention.

A first aspect of the invention pertains to a coordinate measuring system for determining 3D coordinates of an object. The system comprises a coordinate measuring machine comprising an arrangement of sensors configured to generate measurement data from which 3D coordinates of at least one measurement point on the object are derivable. For instance, said arrangement of sensors may comprise distance sensors and/or position or angle encoders. The system also comprises a computing device that is configured to determine, based on the measurement data, 3D coordinates of the measurement points, and for storing nominal data of the object in a data storage, the nominal data comprising nominal dimension data of the object for a pre-defined temperature. The nominal data comprises one or more expansion coefficients of the object. The coordinate measuring system comprises at least one temperature sensor that is configured to determine one or more actual temperature values of the object, e.g. an actual temperature distribution on the object or at least a part of the object, wherein the at least one temperature sensor is configured to generate temperature data based on the determined actual temperature values and to provide the temperature data to the computing device. The computing device is configured to determine, based on the determined 3D coordinates of the measurement points, on the provided temperature data and on the expansion coefficients, tempered coordinates of the object. The determined actual temperature values of the object deviate from the pre-defined temperature, and the tempered coordinates are 3D coordinates that the object would have at a tempered state in which the object uniformly has the pre-defined temperature.

According to some embodiments of the system, determining the tempered coordinates of the object comprises
- obtaining measurement point coordinates of one or more measurement points to be measured by the coordinate measuring machine,
- identifying, in a numerical simulation model of the object, one or more neighbouring nodes for each of the one or more measurement points,
- determining a node-based displacement vector for each neighbouring node, and
- applying to each of the one or more measurement points either the node-based displacement vector of one neighbouring node, e.g. of that neighbouring node that has the shortest distance to the measurement point, or an interpolated displacement vector calculated from the node-based displacement vectors of a plurality of neighbouring nodes, to generate temperature correction information for each of the one or more measurement points.

In one embodiment, the temperature correction information comprises temperature-corrected 3D coordinates, and for determining the tempered coordinates of the object, the computing device is configured to provide the temperature-corrected 3D coordinates to the coordinate measuring machine to effect measurement of the one or more measurement points at the temperature-corrected 3D coordinates.

According to one embodiment, determining the tempered coordinates of the object comprises correcting 3D coordinates of the one or more measurement points measured by the coordinate measuring machine using the temperature correction information.

According to another embodiment, determining the node-based displacement vector comprises using a numerical temperature simulation, e.g. a finite-element temperature simulation, to calculate an elongation value for a difference between the pre-defined temperature and one or more actual temperatures, for instance using a Nastran analysis.

According to another embodiment, identifying the corresponding or interpolated node for each of the one or more measurement points is based on the plurality of actual temperature values of the object, e.g. on an actual temperature distribution on at least a part of the object.

According to the first aspect of the invention, the coordinate measuring device is a coordinate measuring machine (CMM) comprising a base, a probe head, a frame structure comprising a plurality of frame members and one or more actuators, and a control unit configured to control the actuators to move the probe head along a measurement path to approach a plurality of measurement points on the object. The frame members are arranged to movably connect the probe head to the base so that the probe head can approach an object that is positioned on the base, the movability of the probe head defining a working volume of the coordinate measuring machine.

In one embodiment, the control unit comprises the computing device (or vice versa).

In another embodiment, the control unit is configured to define the measurement path based on the determined deformation of the object.

In another embodiment, the control unit is configured to adapt the measurement path in real-time based on the determined deformation of the object.

According to the first aspect of the invention, the CMM comprises one or more fixations configured to fix a position and orientation of the workpiece on the base, and expansion coefficients of the fixations are considered by the computing device for determining the tempered coordinates.

According to another embodiment, the probe head comprises a contacting temperature sensor configured to approach and contact a plurality of surface points of the object to measure a temperature at each of the surface points and to generate contact temperature values for each of the surface points, wherein the computing device is configured to adjust the temperature data from the at least one temperature sensor using the contact temperature values.

In one embodiment, the contacting temperature sensor is included in a tactile stylus that is used for approaching the plurality of measurement points on the object.

In another embodiment, the control unit is configured to control the actuators to move the probe head along the measurement path to approach, both, the plurality of measurement points and the plurality of contacted surface points.

In another embodiment, each feature of the object that comprises at least one measurement point also comprises at least one contacted surface point.

In another embodiment, at least one contacted surface point is a measurement point, i.e. the contacted surface point and the measurement point have the same coordinates. For instance, the plurality of measurement points comprises the plurality of contacted surface points.

According to non-claimed embodiments of the system, the arrangement of sensors comprises at least one laser distance meter. For instance, a coordinate measuring device may be embodied as a laser tracker, as a laser scanner or as a geodetic surveying device.

In one embodiment, the coordinate measuring machine comprises the at least one temperature sensor, particularly a thermal imaging temperature sensor that is configured to be directed to the object and to generate the temperature data in the form of one or more thermal images.

In another embodiment, the system is configured to determine 3D coordinates of the object in a production line, wherein the object is a specimen of a workpiece being produced in the production line.

According to some embodiments of the system, the at least one temperature sensor is a thermal imaging temperature sensor that is configured to be directed to a working volume of the CMM, and to generate the temperature data in the form of one or more thermal images, wherein the computing device is configured to determine the tempered coordinates based on the thermal images.

In one embodiment, the thermal imaging temperature sensor is attached to a frame member or to a probe head of the CMM and movable relative to a base of the CMM.

In one embodiment, the thermal imaging temperature sensor is configured to determine the actual temperature values continuously and to generate a plurality of sets of temperature data based on the continuously determined actual temperature values, wherein each set of temperature data is provided to the computing unit referenced to a position of a probe head of the CMM.

According to some embodiments of the system, the at least one temperature sensor is configured to determine the actual temperature values continuously and to generate a plurality of sets of temperature data based on the continuously determined actual temperature values, wherein each set of temperature data is provided to the computing device in real time, together with a time-stamp, and/or referenced to the measurement data.

In one embodiment, the set of temperature data comprises one or more thermal images. In another embodiment, each set of temperature data is provided to the computing device referenced to a position of a probe head of the CMM.

According to some embodiments of the system, the at least one temperature sensor is configured to determine the actual temperature values synchronously with the generation of the measurement data by the arrangement of sensors, e.g. so that the actual temperature values are determined while the 3D coordinates of the measurement points are determined.

According to some embodiments of the system, the computing device is configured to determine a deformation of the object based on the provided temperature data and on the expansion coefficients, the deformation being in relation to a condition of the same object having the pre-defined temperature.

In one embodiment, determining the tempered coordinates is based on the determined 3D coordinates and on the determined deformation.

According to some embodiments of the system, the computing device is configured to determine, based on the tempered coordinates, deviations of the object at the defined temperature from the nominal dimension data.

According to some embodiments of the system, the computing device is configured to use artificial intelligence to enhance unsatisfactory temperature data provided by the at least one temperature sensor, e.g. wherein the provided temperature data is a sparse point cloud or comprises gaps. This temperature data is enhanced to obtain an enhanced temperature distribution, e.g. as a dense point cloud, for instance by filling gaps or interpolating the temperature values. The tempered coordinates are then determined also based on the enhanced temperature distribution.

According to some embodiments, the system comprises at least one attachable temperature sensor that is configured to be attached to surface points of the object to measure a temperature at the surface points and to generate contact temperature values for the surface points. The computing device is configured to adjust the temperature data from the at least one temperature sensor using the contact temperature values, for instance wherein the attachable temperature sensor is connected with the computing device by means of a cable and/or a wireless data connection.

According to some embodiments of the system, the system comprises a contacting temperature sensor and/or at least one attachable temperature sensor for measuring temperatures at surface points of the object, and the at least one temperature sensor is configured to determine the one or more actual temperature values of the object by means of infrared measurement, for instance being a thermal imaging temperature sensor. According to these embodiments, the contact temperature values for the surface points are used to calibrate or correct the one or more actual temperature values of the object measured by the at least one temperature sensor.

In one embodiment, the surface points are defined for determining an emissivity and/or a reflectivity of the related surface, wherein defining the surface points comprises detecting reflective surfaces on the object using the nominal dimension data, material information of the object and/or the temperature data from the one or more thermal imaging temperature sensor.

In another embodiment, the at least one temperature sensor is configured to move relative to the object while determining one or more actual temperature values of the same surface of the object by means of infrared measurement, and the computing device is configured to determine an emissivity and/or a reflectivity of said surface and to correct, based on the determined emissivity and/or reflectivity, one or more actual temperature values on said surface using the contact temperature values.

A second aspect of the present invention pertains to a method for determining 3D coordinates of an object, e.g. using a coordinate measuring system according to the first aspect of the invention. The method comprises
- measuring 3D coordinates of an object using a coordinate measuring machine, wherein, during the measurement, one or more actual temperatures of the object deviate from a predefined temperature;
- measuring the one or more actual temperatures of the object using at least one temperature sensor; and
- determining, using a computing device and based on the measured 3D coordinates, on the measured one or more actual temperatures and on one or more expansion coefficients of the object, tempered coordinates of the object, wherein the tempered coordinates are 3D coordinates that the object would have at a tempered state in which the object uniformly has the pre-defined temperature.

According to some embodiments of the method, determining the tempered coordinates of the object comprises
- obtaining measurement point coordinates of one or more measurement points to be measured by the coordinate measuring device,
- identifying, in a numerical simulation model of the object, one or more neighbouring nodes for each of the one or more measurement points,
- determining a node-based displacement vector for each neighbouring node, and
- applying to each of the one or more measurement points either the node-based displacement vector of one neighbouring node, e.g. of the neighbouring node having the shortest distance to the measurement point, or an interpolated displacement vector calculated from the node-based displacement vectors of a plurality of neighbouring nodes, in order to generate temperature correction information for each of the one or more measurement points.

In one embodiment, the temperature correction information comprises temperature-corrected 3D coordinates, and for determining the tempered coordinates of the object, the 3D coordinates of the object are measured at the temperature-corrected 3D coordinates.

In another embodiment, determining the tempered coordinates of the object comprises correcting 3D coordinates of the one or more measured measurement points using the temperature correction information.

In another embodiment, determining the node-based displacement vector comprises using a numerical temperature simulation, e.g. a finite-element temperature simulation, to calculate an elongation value for a difference between the pre-defined temperature and one or more actual temperatures, for instance using a Nastran analysis.

In another embodiment, identifying the neighbouring node for each of the one or more measurement points is based on the one or more actual temperature values of the object, e.g. on an actual temperature distribution on at least a part of the object.

According to some embodiments, the method comprises determining a deformation of the object based on the provided temperature data and on the expansion coefficients, the deformation being in relation to a condition of the same object having the pre-defined temperature.

In one embodiment, determining the tempered coordinates is based on the measured 3D coordinates and on the determined deformation.

In another embodiment, a measurement path for a probe head of the coordinate measuring machine is defined based on the determined deformation of the object. In another embodiment, a measurement path for a probe head of the coordinate measuring machine is adapted in real-time based on the determined deformation of the object.

A third aspect, not claimed as such, pertains to a computer programme product comprising programme code which is stored on a machine-readable medium, or being embodied by an electromagnetic wave comprising a programme code segment, and having computer-executable instructions for performing, particularly when executed on a computing device of a coordinate measuring system according to the first aspect, the method according to the second aspect of the invention. The invention in the following will be described in detail by referring to exemplary embodiments that are accompanied by figures, in which:
- Fig. 1a: shows an exemplary embodiment of a coordinate measuring machine (CMM) as a part of a first exemplary embodiment of a coordinate measuring system according to the invention, the CMM comprising two thermal imaging temperature sensors;
- Fig. 1b: shows another exemplary embodiment of a of a CMM as a part of a second exemplary embodiment of a coordinate measuring system according to the invention, the CMM comprising a movable thermal imaging temperature sensor;
- Fig. 2a: shows an exemplary workpiece being measured by a CMM, the workpiece having a uniform temperature that a pre-defined temperature;
- Fig. 2b: shows the workpiece of Fig. 2a having a temperature that deviates from the pre-defined temperature and being deformed due to the deviation;
- Fig. 3: shows the workpiece of Fig. 2a being fixed to the CMM and two thermal imaging temperature sensors measuring temperatures of the workpiece;
- Fig. 4: shows an exemplary thermal image of the workpiece of Fig. 3;
- Fig. 5: shows nominal dimensional data of the workpiece;
- Fig. 6: shows the workpiece being composed of different materials, each material having a different expansion coefficient;
- Fig. 7a: shows a measurement point on the workpiece, the measurement point being associated with a node in a model of the workpiece;
- Fig. 7b: shows the measurement point and node of Fig. 7a, wherein the node comprises deflection information related to a temperature of the workpiece;
- Fig. 8: shows a flowchart illustrating a prior art method;
- Fig. 9: shows a flowchart illustrating an exemplary embodiment of a method according to the invention;
- Fig. 10: shows a laser tracker as a part of a third exemplary embodiment, which however is not claimed, of a coordinate measuring system measuring a workpiece;
- Fig. 11a: illustrates a first prior art method for measuring a workpiece in a production line;
- Fig. 11b: illustrates a second prior art method for measuring a workpiece in a production line;
- Fig. 12: illustrates an exemplary method according to the invention for measuring a workpiece in a production line;
- Fig. 13: shows a flowchart illustrating a first exemplary embodiment of a method according to the invention measuring a workpiece in a production line; and
- Fig. 14: shows a flowchart illustrating a second exemplary embodiment of a method according to the invention measuring a workpiece in a production line.

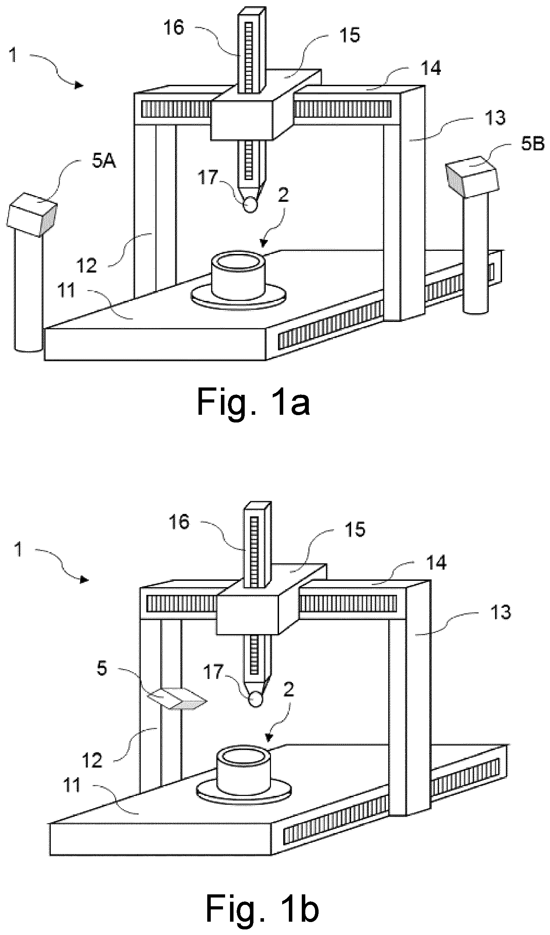

In Figures 1a and 1b, two exemplary embodiments of coordinate measuring machines (CMM) are shown that comprise at least one temperature sensor to determine temperatures of an object being measured by the CMM. Both CMMs are a portal bridge CMMs, wherein a probe head linked by a frame structure to a base on which a workpiece as an object to be measured is positioned. The frame structure comprises several members that are movable with respect to one another, so that the probe head is supported by the members for movement relative to the base along three mutually perpendicular axes.

In detail, the CMM 1 comprises a base 11, on which the frame structure is arranged. As a member of the frame structure a portal is arranged so that it can be moved in a first, longitudinal direction. The portal has two portal legs 12, 13, which are connected at their upper ends by a bridge 14 as further member of the frame structure. A carriage 15, which can be driven along the bridge 14 in a second direction is positioned on the bridge. A ram 16 positioned at the carriage 15 can be moved in a third direction. The three directions are preferably orthogonal to one another, although this is not necessary for the present invention.

A probe head 17 is fastened on the lower free end of the ram 16. The probe head 17 may be designed for arranging a contact probe, e.g. a scanning or touch trigger probe, or a non-contact probe, particularly an optical, capacitance or inductance probe. The CMM 1 is designed for determination of three spatial coordinates of a measurement point in a working volume of the CMM 1, i.e. on an object 2 to be measured that is positioned in the working volume, e.g. on the base 11. The CMM 1 comprises three linear drive mechanisms for providing movability of the probe head 17 relative to the base 11 in the first, second and third directions (X, Y and Z direction) . Each linear drive mechanism has a linear guide, one in the first, one in the second and one in the third direction, respectively. Moreover, each linear drive mechanism comprises a linear measuring instrument for determination of a first, a second or a third drive position, respectively, of each movable member in the first, the second or the third direction.

In the first embodiment of Figure 1a, the CMM 1 comprises two fixedly installed temperature sensors 5A, 5B that are positioned and oriented to capture temperature data of an object 2 positioned within the working volume of the CMM 1, e.g. on the base 11. In the second embodiment of Figure 1b, the CMM 1 comprises a temperature sensor 5 that is provided on a movable member (leg 12) of the CMM 1 and is, thus, movable relative to the base 11 and the object 2 positioned thereon. The temperature sensors 5, 5A, 5B are embodied as thermal imaging temperature sensors, for instance as thermographic cameras configured to create thermal images using infrared (IR) radiation. For instance, the sensors 5, 5A, 5B may be sensitive to wavelengths from about 1 µm to about 14 µm.

The claimed invention can be used in combination with any coordinate measurement method that is suitable for determining 3D coordinates of an object. The claimed invention is therefore not restricted to a CMM in the portal bridge design as shown here, but may generally be used for all types of coordinate measuring machines.

For instance, it may equally be used for coordinate measuring machines in gantry design in which only the bridge with two supports, functioning as very short feet, can travel along two highly placed fixed rails, or a CMM being designed as parallelkinematics machine as well as for a CMM having linear or serial kinematics. For instance, the CMM may be designed in bridge-type, L-bridge-type, horizontal-arm-type, cantilevertype or gantry-type. Also, a coordinate measuring device, which is not claimed as such, may be or comprise a laser scanner, a laser tracker or one or more time-of-flight (TOF) cameras. Additionally, the coordinate measuring machine may be part of another machine, e.g. a processing machine in which the workpieces are produced or processed.

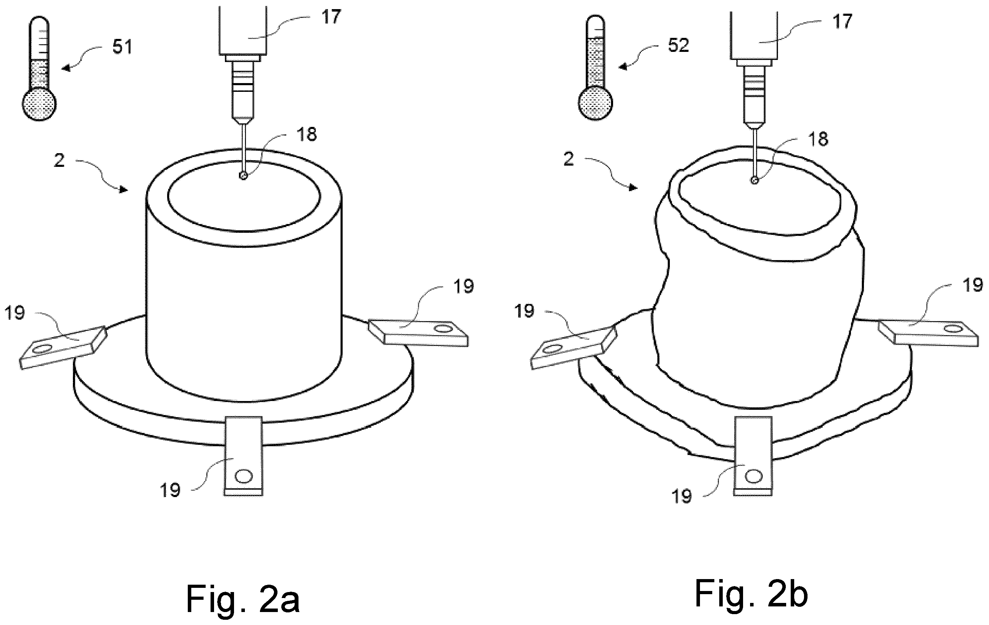

Figures 2a and 2b show a workpiece 2 being fixed by means of three fixtures 19 to the base of the CMM and being measured by means of a tactile stylus 18 attached to the probe head 17 of the CMM. The fixation enhances the measuring accuracy and is advantageous where highly precise measurements are required. However, depending on the type and material of the fixations, these may strongly influence the temperature development of the workpiece 2, particularly of the sections or components at which the workpiece is fixed.

In Figure 2a, the workpiece 2 is measured at a first temperature 51, which is a "normal temperature" pre-defined by nominal data of the workpiece, in which normal temperature the workpiece 2 has defined nominal dimensions. The normal temperature may be a room temperature, e.g. being defined as 20°C. Measuring the workpiece 2 at this normal temperature 51, the determined 3D coordinates may be used directly to compare them with nominal dimensions of the workpiece 2.

In Figure 2b, the same workpiece 2 is measured while having a second temperature 52 (e.g. a second inhomogeneous temperature field), which deviates from the defined "normal temperature" 51. For instance, the workpiece 2 that has just been produced is still hot from its last processing steps. Due to different thermal expansion coefficient(s) of the materials of the workpiece, the dimensions of the workpiece 2 may differ significantly from those that the same workpiece would have at the normal temperature. Also, the temperature distribution may be irregular and patchy, since some parts may cool down faster than others. It should be noted that the deformations of the workpiece 2 shown in Figure 2b are depicted in an exaggerated manner for means of clarification. Due to these resulting deformations, the 3D coordinates determined by measuring the workpiece 2 at this second temperature 52 cannot be used directly to compare them with nominal dimensions of the workpiece 2.

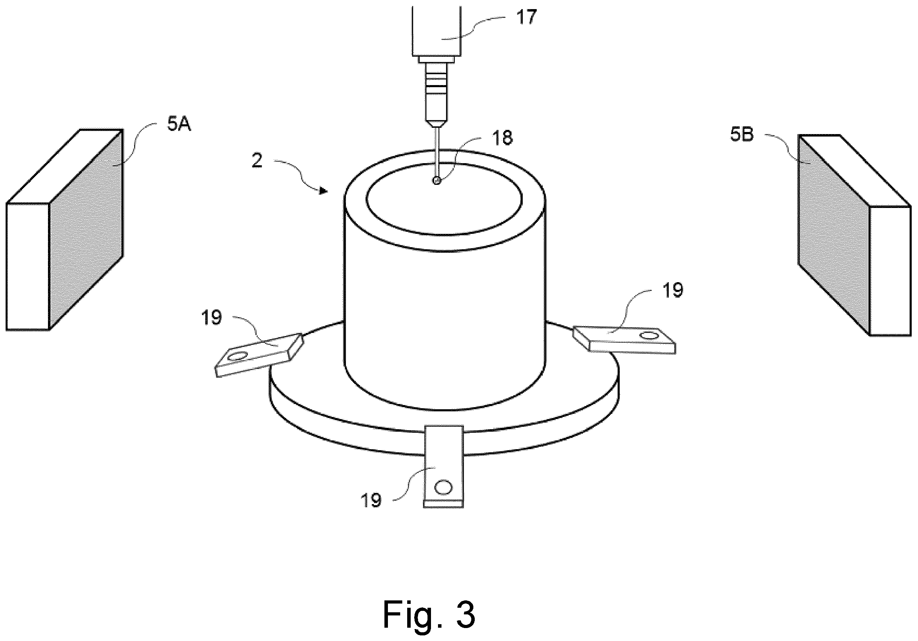

In Figure 3, two thermal imaging temperature sensors 5A, 5B measure temperatures of the workpiece 2 while it is being measured by the coordinate measuring machine, e.g. the CMM of Figure 1a. Temperatures and their distribution on the workpiece 2 are measured continuously and at a multitude of points of the workpiece simultaneously.

Using computer-aided engineering (CAE), e.g. finite element method (FEM), the known workpiece 2 is virtually meshed, and a virtual model, e.g. an FEM model, is generated. The model comprises all relevant physical information, e.g. temperature distribution (whether homogeneous or discontinuous), material information (thermal expansion coefficient, mass) and other information regarding loadings, e.g. by fixations such as clamping. The user may additionally define relevant material parameters, e.g. the expansion coefficient(s) of the workpiece. Alternatively, information regarding the materials and their 3D distribution in the workpiece 2 may be provided together with CAD data (or other 3D model data) of the workpiece.

The manner in which the workpiece is fixed on the machine and temperature conditions, e.g. expansion coefficients, of the fixtures 19 and the base on which the workpiece is fixed can also be known. If the workpiece 2 is fixed as shown here, preferably, the fixation 19 and its heat dissipation or heat addition are defined and determined accordingly. A type and position of the fixation 19 may be determined automatically or provided as a user input. The base and other relevant parts of the CMM can also be modelled. The initial temperature distribution of the workpiece and optionally also the initial temperature distribution of the base can be defined in the virtual model. If the fixation 19 is also taken into account, the deformed state of the workpiece 2 due to the inhomogeneous temperature distribution is determined at the beginning by transferring the temperature distribution at the measured points to the virtual model.

The temperature distribution on the workpiece 2 is then determined by appropriate spatial interpolation at all nodes of the model. Subsequently, a deformation state can be determined using the FEM model and a corresponding solver (e.g. Nastran). A mean temperature of the coordinate measuring machine or of its surroundings can be used as the reference temperature. Alternatively, the reference temperature can be defined according to standards or norms, e.g. of the workpiece or the manufacturing process. Optionally, initial deformations of the base on which the workpiece 2 is positioned can be determined in the same way. Taking the fixation 19 into account comprises setting corresponding nodes in the models or connecting them to the base. If the base is part of the model, it is assumed that its deformation state defines the nodal points of the fixation or impresses them on the workpiece.

During the actual geometric measuring process, the temperature status of the workpiece 2 (and optionally the base) is recorded continuously and at several points. These conditions are transferred to the FEM model. The temperature distribution on the workpiece 2 and optionally the base at each node is estimated via spatial interpolation.

If the fixation 19 is taken into account, the change to the initial state (i.e. shortly before or after fixation) is determined. Otherwise, i.e. if the fixation 19 is not taken into account, the deformation is attributed either to the average machine status or according to standards and norms based on the absolute temperature distribution via FEM simulation. If the fixation 19 is taken into account, the changed deformation status due to the temperature change at the beginning and the fixation 19 is subtracted from the initial deformation state and then also returned to the mean machine state or according to standards and norms.

This specific and virtual deformation state can then be used to compensate for measurement or processing errors or to trace them back to the standards and norms. Thereby, the relevant points on the workpiece 2 in terms of measurement are used. The deformation state is spatially interpolated on these points and subtracted accordingly from the measurement. Thus, the user receives measurement results that are calculated back to the reference temperature, i.e. an average machine temperature or defined standards.

If the temperature changes over time, some or all measurements can be repeated periodically. Alternatively, similar measurements can be taken at similar locations. This information, together with the changed temperature values and the specific deformation states over time, enable the simulation to be optimized. Parameters can be adapted, for example the expansion coefficient, modelling details of the fixation, so that the estimated changed deformation state better matches the estimated measurement states.

Ideally, the improved simulation model can now be used to redetermine all deformation states, including the initial state, and to correct the measurement and processing. If this is not possible, the corrected model is used from the respective point in time. The model can then be continuously improved.

The more temperature measuring points there are and can be transferred to the model as input, the closer the estimated deformations come to reality. In order to enhance the number of temperature measuring points, it is advantageous to use non-contact temperature measuring methods such as thermal imaging cameras. However, these are dependent on the corresponding workpiece properties, i.e. emission coefficient in the infrared range, and on the environmental influences such as reflections on the surfaces of the workpiece.

Non-contact temperature measurements can thus be inaccurate and negatively affect the quality of the deformation state condition. However, the non-contact temperature measurements can be improved autonomously by measuring temperatures at certain points of the workpiece in a standard contacting manner and by contactless temperature measuring at the same points or at similar positions on the workpiece. In this manner, parameters of the contactless measurement can be adjusted in such a way that the above-mentioned influences from the workpiece itself or from the environment are taken into account, so that the contactless measurement provides measurement values with a higher precision. For example, the effective emission coefficient of the workpiece can be determined. The emissivity of a surface depends on the nature of the surface and its material. For instance, rough surfaces have a higher emissivity.

Workpiece surfaces that are prone to temperature reflections due to their reflection properties and/or due to their orientation relative to an external heat source may be identified automatically. Then, contacting temperature measurement can be focussed on such surfaces. For instance, metal surfaces of the workpiece 2 may be detected using the nominal 3D data and material information of the workpiece 2, and, workpiece surfaces that are oriented with a critical angle relative to an external heat source may be identified using the orientation of the workpiece 2 and the positions of the known heat sources relative to the CMM. Emission, absorption and reflection are interconnected properties of a surface, so that an emission coefficient of a surface can be derived from a detected temperature reflection and vice versa.

Thus, the emissivity of a certain surface can be determined using the contacting temperature measurements. The determined emissivity can then be used to improve (e.g. correct) the infrared temperature measurements, especially if the determined emissivity exceeds a predefined value, typically about 0.6. If the value is smaller (e.g. < 0.6), there is generally a risk of measuring temperature reflection of the environment and determining environmental temperature instead of object temperature. In this case, the temperatures measured by means of infrared sensors for such a surface might be ignored instead of corrected.

For instance, such temperature reflections can be identified by moving the thermal image sensor relative to the object and capturing more than one thermal image of the same surface. If the temperature image changes when the thermal image sensor is moved in relation to the surface, this indicates the presence of reflections. Thus, reflections can be detected and filtered out using such relative movement and a postprocessing step, which might also use AI techniques.

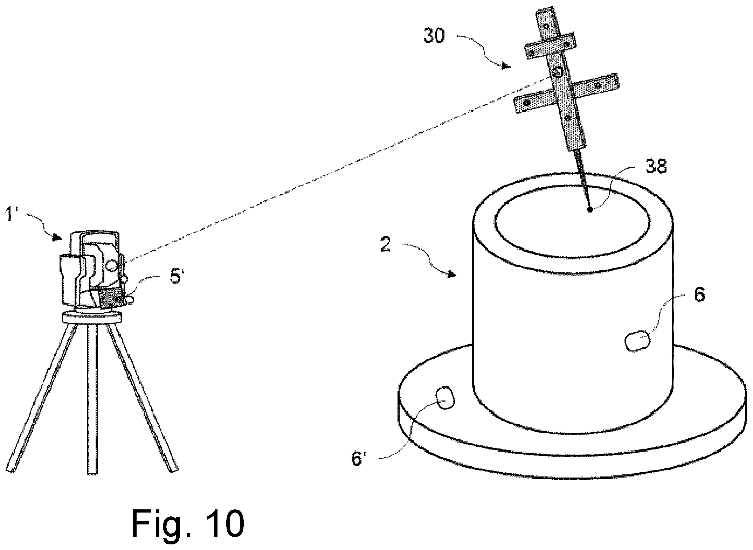

The optional contacting temperature measurement may be performed either by a special stylus attached to the probe head 17 (e.g. by means of a magnet) or by a combined stylus that is attached to the probe head 17 and used for measuring, both, 3D coordinates and temperatures of the workpiece 2. Alternatively, as shown in Figure 10, attachable temperature sensors may be used.

Alternatively or additionally, methods utilizing artificial intelligence (AI) can help to quickly consider temperature states that deviate from determined states. The local temperature allocation can be carried out using an AI-based evaluation of the thermal images. This may include adapting local emission values or eliminating reflections in the images. The local temperature information obtained is then transferred to a finite element model. An AI system may be trained by simulation results (thermal expansions) for discrete temperature distributions which provide the data basis. Then, an AI can predict simulation results for temperature states that deviate from the trained basis data.

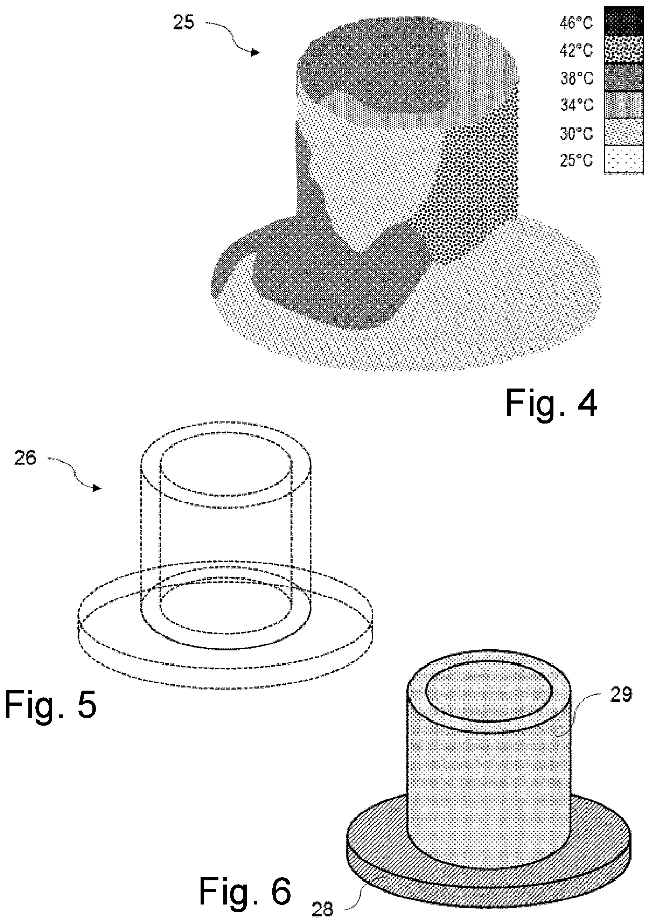

A complete thermal image of the workpiece 2 may be generated by means of a temperature simulation (see Figure 4). From this, in turn, the temperature-dependent shift image is obtained. Measurement points on the workpiece can either be mapped exactly or approximately. Finally, the temperaturerelated displacement vector is available for all measuring points on the workpiece.

For all measuring points of the measurement, the temperaturerelated displacement vector is stored in the software of the measuring machine and can be automatically taken into account (i.e. compensated) during the measurement.

Figure 4 shows an exemplary thermal image 25 of the workpiece captured by one of the thermal imaging temperature sensors 5A, 5B of Figure 3 being embodied as a thermographic camera. Each colour (pattern) of the image 25 represents a different temperature. In this example the measured temperatures range from 42°C to 30°C, thereby deforming different parts of the workpiece in different ways. The higher the resolution of the thermal images 25, the better the resulting deformation can be calculated.

Figure 5 shows nominal dimensional data 26 of the workpiece, for instance computer-aided design (CAD) data. The nominal dimensional data 26 describes the nominal dimensions of the workpiece at the normal temperature, i.e. of a tempered workpiece.

According to some embodiments of the invention, the nominal data also comprises information about expansion coefficients of the workpiece. In the example of Figure 6, the workpiece comprises two different materials 28, 29, each having a known expansion coefficient that is provided in the nominal data. It is thus known - at least for a span of likely temperatures - by how much each part of the workpiece expands when having a certain temperature. In combination with the measured temperatures, e.g. from the thermal image 25 of Figure 4, the expansion coefficients can be used to calculate a deformation of the workpiece relative to its nominal dimensions as provided in the nominal dimensional data 26 of Figure 5. Also, after a measurement, measured coordinates of measurement points on the (untempered) workpiece can be corrected by calculating a deformation of the workpiece relative to its nominal dimensions, based on the expansion coefficients and the thermal image.

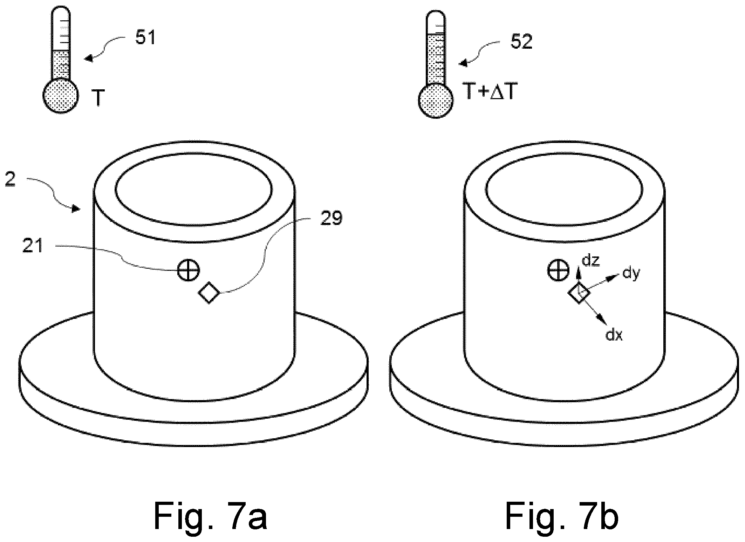

Figures 7a and 7b illustrate the use of a finite-element temperature simulation to calculate elongation values for any temperature difference ΔT between an actual temperature 52 and a pre-defined normal temperature 51. Instead of the illustrated finite-element temperature simulation, also other numeric temperature simulations can be used.

In Figure 7a, the object 2 has the normal temperature 51. A measurement point 51 reflects the coordinates for the normal temperature 51. The FEM model comprises a multitude of FE nodes, wherein the FE node 29 is the closest to the measurement point 21. Preferably, the number of nodes in the FEM model is sufficiently high so that the positional difference between node 29 and measurement point 21 is negligible. Each FE node may be assigned a displacement vector for a plurality of temperatures or temperature differences ΔT, e.g. wherein the displacement vector for a temperature difference ΔT of zero (i.e. the normal temperature 51) is zero. These displacement vectors may be provided as a lookup table.

Figure 7b shows the same object 2 with the same measurement point 21 and the same FE node 29. However, the object 2 has an actual temperature 52 that differs from the pre-defined normal temperature 51 (T+ΔT). This temperature difference ΔT causes a displacement vector on the node 29 (dₓ, d_{y}, d_{z}). Since the positional difference between node 29 and measurement point 21 is negligible, the same displacement vector is valid for the measurement point 21 and can be used to compensate the coordinate measurement. Under the conditions of T+ΔT (i.e. at the temperature 52), the displacement vector caused by ΔT can be subtracted from the measured value at measurement point 21 to get the measurement results that would apply at the normal temperature 51.

For performing this method, the temperature of the workpiece 2 preferably should be constant or basically constant. After the temperature of the workpiece has been determined, the method 200 starts with reading defined measurement point coordinates from a measurement plan (step 230). Next, corresponding or neighbouring nodes are found 240 in the FE model for each of the defined measurement point coordinates. A Nastran analysis (or an analysis using a different solver) is performed 250 with n constant temperature loadings.

Displacement results for the these nodes are filtered 260 and temperature-dependent displacement vector tables are written 270 for these nodes. Then, the coordinate measurement is performed 280 at the pre-defined measurement point coordinates using the temperature correction information.

Instead of using the displacement vectors from a single node 29 as shown here, also an interpolation can be performed for a plurality of neighbouring nodes, i.e. those nodes of the model that are closest to the measurement point 21. This allows calculating an "interpolated node" with interpolated displacement vectors for the measurement point 21 from displacement vectors of, e.g. three or four, neighbouring nodes. This is especially useful if the node density in the model is not high enough to neglect the positional difference between the measurement point 21 and the nearest node 29.

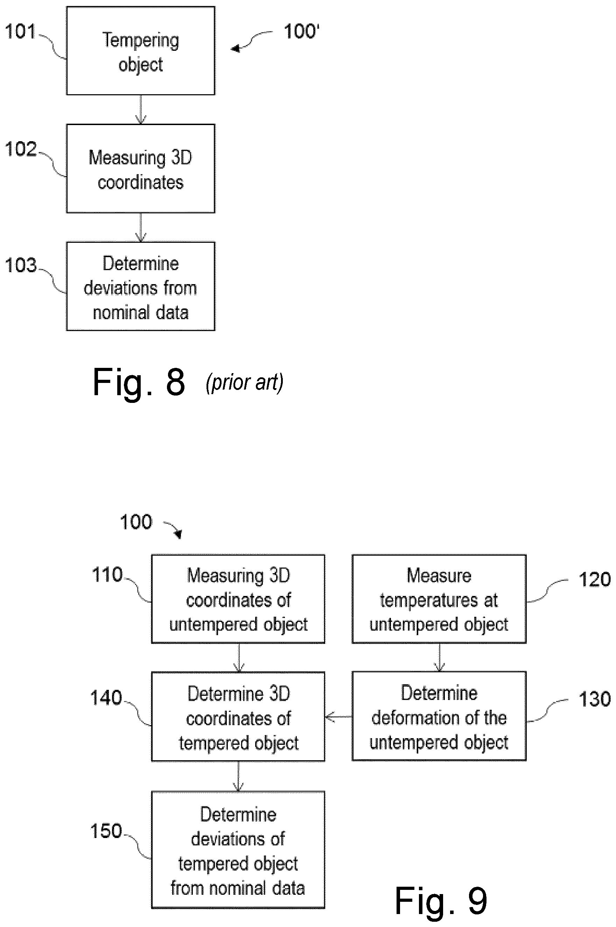

Figure 8 shows a flowchart illustrating a prior art method 100' for determining 3D coordinates of an object. The method starts with tempering 101 the object in order to bring it to the pre-determined "normal temperature" in order to eliminate workpiece deformations due to the influence of temperature. Tempering the workpiece may include storing it in a tempered, e.g. air-conditioned, room having exactly the desired normal temperature, and waiting until the workpiece assumes the surrounding temperature.

When the object has been tempered, it is positioned in a CMM - which may also be positioned in the tempered room - and 3D coordinates of measurement points on the workpiece are measured 102. The measured coordinates can then be compared with nominal data of the workpiece to determine 103 whether there are significant deviations.

This conventional approach has the disadvantage of a long waiting time until the temperatures in the workpiece are equalized to the normal temperature. This adjustment time depends, amongst other things, on the initial temperatures in the workpiece and on the heat inertia of the workpiece. Since tempering a workpiece may thus take a long time before a measurement can be made, it would be desirable to reduce the waiting time.

Figure 9 shows a flowchart illustrating an exemplary embodiment of a computer-implemented method 100 according to the invention, wherein the step of tempering the object (e.g. workpiece) is not needed.

Instead, in a first step of the method, 3D coordinates of an "untempered" object are measured 110 by means of a CMM. Since the object may be distorted, these coordinates cannot be used directly. Consequently, during the coordinate measurement 110 in the CMM, a multitude of temperatures of the untempered object are measured by means of one or more thermal imaging temperature sensors. Preferably, these temperature measurements 120 comprise a continuous monitoring of a temperature distribution on the surfaces of the workpiece.

Based on known expansion coefficients of the workpiece (e.g. provided together with the nominal data) and on the measured 120 temperatures, a deformation of the untempered workpiece can be determined 130, i.e. the deformation relative to the form the same workpiece would have if it would have been tempered.

Based on the measured 3D coordinates and on the determined deformation (or, alternatively, directly on the measured temperatures and expansion coefficients), 3D coordinates may be determined 140 that the workpiece would have if it would have been tempered. The determined 140 coordinates can then be compared with nominal data of the workpiece to determine 150 whether there are significant deviations from design.

The steps 130, 140 and 150 can be performed by an algorithm, which uses as input at least the initially measured temperatures of the object and the distribution of expansion coefficients in the measured object, wherein the distribution of expansion coefficients may be derived from information of a distribution of materials in the measured object and the properties of these materials, including the expansion coefficients.

In one embodiment, using computer-aided engineering (CAE), e.g. finite element method (FEM), the known workpiece is virtually meshed, wherein the user additionally defines relevant material parameters, e.g. the expansion coefficient(s) of the workpiece. The fixation and its heat dissipation or heat addition are defined and determined accordingly. The base and other relevant parts of the machine can also be modelled. The initial temperature state of the workpiece is defined - optionally also the initial temperature state of the base can be defined.

If the captured temperature data is not sufficient to determine a deformation of the object with sufficient accuracy, the data optionally may be enhanced using artificial intelligence (AI), e.g. using FEM simulations. For instance, if the captured temperature data comprises too few temperature measurement points, e.g. is only provided as a sparse point cloud or has gaps at important object features, the AI, having access to the object's nominal data including the materials and structures of the object, may interpolate the temperature data, taking into account the object's nominal data to generate a denser point cloud of temperature values or fill the gaps,

Figure 10 shows another exemplary embodiment, not claimed as such, of a coordinate measuring system measuring a workpiece 2. Instead of the CMM shown in Figures 1a and 1b, the coordinate measuring device performs laser-based distance measurements for determining 3D coordinates of the workpiece 2. Such a device may be a laser scanner or a geodetic or industrial surveying instrument. In the show example, the coordinate measuring device is a laser tracker 1' that determines a distance to a retroreflector of a measuring aid 30 using a laser distance meter. The laser tracker 1' determines a pose of the measuring aid 30 using a camera to determine a distribution of light points of the measuring aid 30 in an image of the camera. Based on the determined distance and pose, a 3D position of a measuring tip 38 of the measuring aid 30 can be determined, so that the measuring aid 30 can be used to measure points on the workpiece 2. The laser tracker 1' is adapted to track the movements of the measuring aid 30 so that the laser beam of the laser distance meter stays locked on the retroreflector.

In the shown embodiment, the laser tracker 1' comprises a thermal imaging temperature sensor 5' to measure temperatures of the workpiece 2 while it is being measured using the tracked measuring aid 30. Temperatures and their distribution on the workpiece 2 are measured continuously and at a multitude of points of the workpiece simultaneously, e.g. as described with respect to Figure 3. The known workpiece 2 is virtually meshed, and a virtual model is generated. The temperature distribution on the workpiece 2 is then determined by appropriate spatial interpolation at all nodes of the model. Subsequently, an initial deformation state can be determined with the help of the model and a corresponding solver (e.g. Nastran). A mean temperature of the measuring device or of its surroundings can be used as the reference temperature. For instance, a temperature sensor may be integrated into the measuring aid 30.

In contrast to the situation shown in Figure 3, in Figure 10 only one thermal imaging temperature sensor 5' is provided, so that some parts of the workpiece 2 cannot be imaged in a thermal image of the thermal imaging temperature sensor 5'. This problem may be overcome by positioning one or more further temperature sensors, or by positioning one or more mirrors with known shapes, positions and poses to capture the otherwise hidden parts of the workpiece 2.

Alternatively or additionally, gaps in the temperature distribution data of the workpiece surface may be filled computationally. For instance, this may comprise one or more of the following:
- using classical interpolation and extrapolation techniques, e.g. linear, bilinear or cubical;
- using look-up tables, e.g. generated from previously performed complete measurements;
- using AI models that allow generating a complete image from a reduced input;
- using complex FEM models that derive the distribution from an optimization step of the model; or
- combining AI and FEM models, i.e. using complex FEM simulations to simulate data sets of assumed temperature distributions and to train an AI model that estimates the complete distribution from an incomplete distribution.

As described with respect to Figure 3, non-contact temperature measurements can be improved by measuring temperatures at certain points of the workpiece in a standard contacting manner and by contactless temperature measuring at the same points or at similar positions on the workpiece. In the embodiment shown in Figure 10, workpiece surfaces that are prone to temperature reflections due to their reflection properties and/or due to their orientation relative to an external heat source may be equipped with contacting temperature sensors 6, 6'. Alternatively, the contacting temperature measurement may also be performed by a temperature sensor integrated into the measuring tip 38 of the measuring aid.

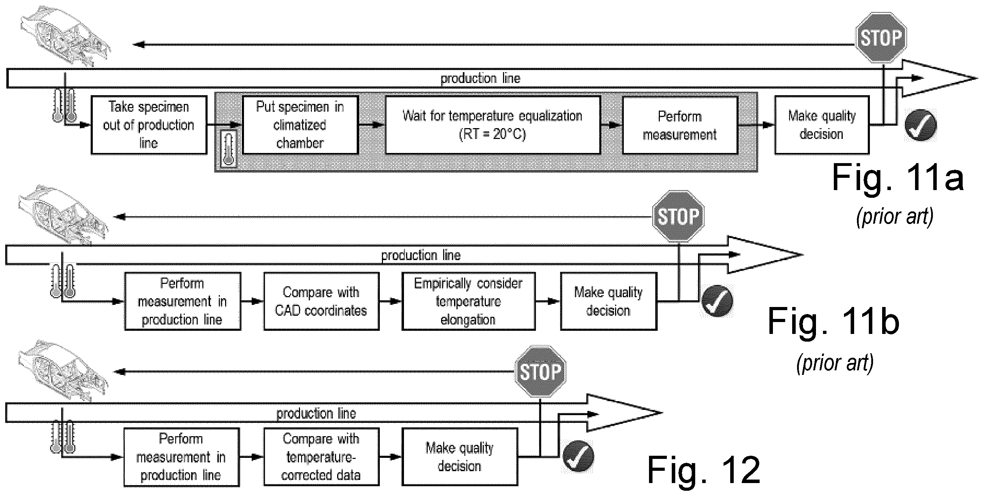

Figures 11a and 11b illustrate two different methods for measuring a workpiece in a production line. In the shown examples, the workpiece is a car body which is produced in a production line comprising a multitude of production steps. Dimensions of specimens of the workpiece need to be checked at the end of the production line or between two production steps. Based thereon, a quality decision is made. If the measured dimensions of the workpiece meet predefined thresholds, the workpiece is good for further production or delivering to a customer. If the measured dimensions of the workpiece do not meet the predefined thresholds, the workpiece is rejected, i.e. the workpiece is scrapped or removed into the production line to be redone or adapted. Also, the production line may be halted to check for recurring production errors etc.

In the method shown in Figure 11a, a specimen is taken out of the production line which is not climatized, so that a temperature of the specimen or a temperature distribution in the specimen are not known. The specimen is put into a climatized chamber having a temperature that meets a predefined measuring temperature, e.g. 20°C. Then, the method requires waiting until the temperature of the specimen has equalized to the temperature of the climatized chamber, before the measurement can be performed.

In the method shown in Figure 11b, the specimen can be measured in the production line, i.e. during production or between two production steps, for instance using the laser tracker of Figure 10. A temperature at the production line can be measured to determine a temperature difference to the pre-defined measuring temperature. The measured dimensions are compared with CAD coordinates, wherein temperature elongation is considered empirically.

Figure 12 illustrates an exemplary method for measuring a workpiece in a production line according to the present invention. This method considers the temperature-dependent elongation effect and leads to precise measurement result allowing a fast and confident quality decision. Similar to the method of Figure 11b, the specimen can be measured without being taken out of the production line, for instance during production or between two production steps using the laser tracker of Figure 10. According to the invention, the measurement includes measuring a temperature of the workpiece or a temperature distribution of the workpiece. The measured coordinates are compared with temperature-corrected data (e.g. as described above with respect to Figure 7b) before the quality decision is made.

For instance, the comparison with temperature-corrected data may comprise using a finite-element model (FE model), calculating temperature elongation depending on temperature variation, and integrating temperature correction information into the measuring system as a lookup table.

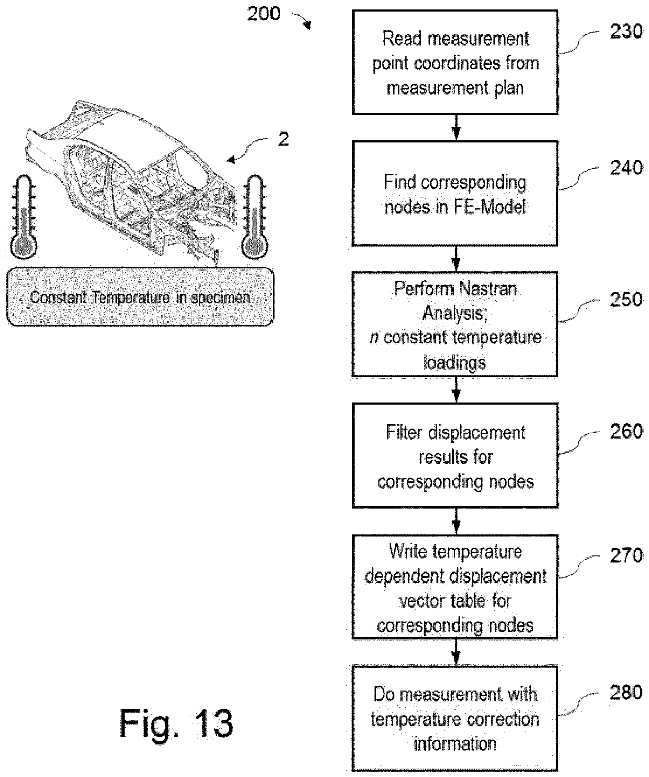

Figure 13 shows a flowchart illustrating an exemplary embodiment of a method 200 according to the invention for measuring a workpiece 2, for instance in a production line. For performing this method, the overall temperature of the workpiece 2 preferably should be the same or basically the same. For instance, this is the case in a production line that is not climatized, i.e. has a different temperature than a pre-defined normal temperature. After the uniform temperature of the workpiece has been determined, the method 200 starts with reading defined measurement point coordinates from a measurement plan (step 230). Next, corresponding nodes are found 240 in the FE model for each of the defined measurement point coordinates. A Nastran analysis (or an analysis using a different solver) is performed 250 with n constant temperature loadings. Displacement results for the corresponding nodes are filtered 260 and temperature-dependent displacement vector tables are written 270 for the corresponding nodes. Then, the coordinate measurement is performed 280 at the pre-defined measurement point coordinates using the calculated temperature correction information.

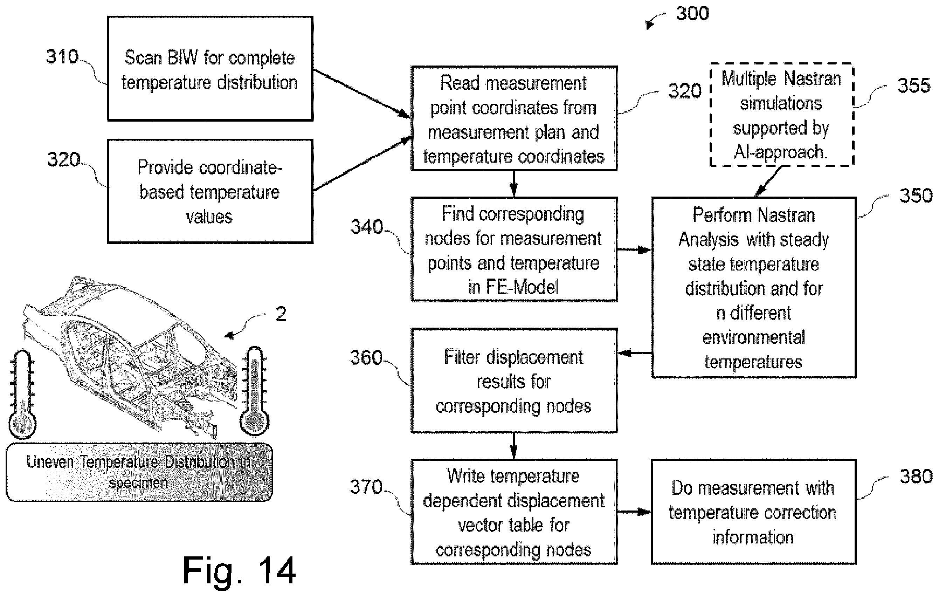

Figure 14 shows a flowchart illustrating another exemplary embodiment of a method 300 according to the invention for measuring a workpiece 2, for instance in a production line. For performing this method, the temperature of the workpiece 2 need not be constant or uniform, i.e. the workpiece can have an uneven temperature distribution. For instance, this is the case if recent production steps induced heat at some parts of the workpiece but not at others, or if one side of the workpiece was exposed to a heat source, such as a machine or direct sunlight. The method 300 begins with determining the temperature distribution of the workpiece by performing 310 a scan of the complete workpiece, e.g. using one or more thermal imaging temperature sensors and/or a multitude of contact temperature measurements. Coordinatebased temperature values are provided 320 by a model of the workpiece. Then, the defined measurement point coordinates provided by a measurement plan and the temperature coordinates are read (step 330). For each of the defined measurement point coordinates and their determined temperatures, a corresponding node is identified 340 in the FE model. A Nastran analysis (or an analysis using a different solver) is performed 350 with a steady state temperature distribution and for a multitude of different temperatures. This may include multiple Nastran simulations 355 that are supported by artificial intelligence approaches. Displacement results for the corresponding nodes are filtered 360 and temperature-dependent displacement vector tables are written 370 for the corresponding nodes. Then, the coordinate measurement is performed 380 at the pre-defined measurement point coordinates using the calculated temperature correction information.

In contrast to other methods, the methods shown in Figures 13 and 14 are able to provide a compensation that is based on a full three-dimensional temperature distribution instead of only providing a punctually measured temperature or at least a temperature picture on the surface.

Although the invention is illustrated above, partly with reference to some preferred embodiments, it must be understood that numerous modifications and combinations of different features of the embodiments can be made.

## Claims

1. Coordinate measuring system for determining three-dimensional coordinates of an object (2), comprising
- a coordinate measuring machine (1) comprising an arrangement of sensors configured to generate measurement data from which three-dimensional coordinates of at least one measurement point on the object (2) are derivable, particularly wherein the arrangement of sensors comprises distance sensors and/or position or angle encoders; and
- a computing device configured to determine, based on the measurement data, three-dimensional coordinates of the measurement points, and for storing nominal data (26, 27) of the object (2) in a data storage, the nominal data comprising nominal dimension data (26) of the object (2) for a pre-defined temperature (51),
wherein the coordinate measuring machine (1) comprises
- a base (11);
- a probe head (17);
- a frame structure comprising a plurality of frame members (12-16) and one or more actuators;
- a control unit configured to control the actuators to move the probe head (17) along a measurement path to approach a plurality of measurement points on the object (2); and
- one or more fixations (19) configured to fix a position and orientation of the object (2) on the base (11),
wherein the frame members (12-16) are arranged to movably connect the probe head (17) to the base (11) so that the probe head (17) can approach an object (2) that is positioned on the base (11), the movability of the probe head (17) defining a working volume of the coordinate measuring machine (1),
wherein
- the nominal data comprises one or more expansion coefficients of the object (2);
- the coordinate measuring system comprises at least one temperature sensor that is configured to determine (120) one or more actual temperature values (52) of the object (2), particularly an actual temperature distribution on at least a part of the object (2),
- the at least one temperature sensor is configured to generate temperature data based on the determined actual temperature values and to provide the temperature data to the computing device; and
- the computing device is configured to determine (140), based on the determined three-dimensional coordinates of the measurement points, on the provided temperature data and on the expansion coefficients, tempered coordinates of the object,
wherein the determined (120) actual temperature values of the object (2) deviate from the pre-defined temperature (51), and the tempered coordinates are three-dimensional coordinates that the object (2) would have at a tempered state in which the object uniformly has the pre-defined temperature (51),
**characterized in that**
expansion coefficients of the fixations (19) are known and are considered by the computing device for determining (140) the tempered coordinates.

2. Coordinate measuring system according to claim 1,
wherein determining (140) the tempered coordinates of the object comprises
- obtaining (230, 330) measurement point coordinates of one or more measurement points (21) to be measured by the coordinate measuring machine;
- identifying (240, 340), in a numerical simulation model of the object (2), one or more neighbouring nodes (29) for each of the one or more measurement points (21),
- determining a node-based displacement vector for each neighbouring node (29);
- applying, to each of the one or more measurement points (21),
- the node-based displacement vector of one neighbouring node (29), particularly of the neighbouring node having the shortest distance to the measurement point, or
- an interpolated displacement vector calculated from the node-based displacement vectors of a plurality of neighbouring nodes (29),
to generate temperature correction information for each of the one or more measurement points (21), particularly wherein the temperature correction information comprises temperature-corrected three-dimensional coordinates, and for determining (140) the tempered coordinates of the object, the computing device is configured to provide the temperature-corrected three-dimensional coordinates to the coordinate measuring machine (1) to effect measurement of the one or more measurement points (21) at the temperature-corrected three-dimensional coordinates.

3. Coordinate measuring system according to claim 2,
wherein
- determining (140) the tempered coordinates of the object comprises correcting three-dimensional coordinates of the one or more measurement points (21) measured by the coordinate measuring machine (1) using the temperature correction information; and/or
- determining the node-based displacement vector comprises using a numerical temperature simulation to calculate an elongation value for a difference between the pre-defined temperature (51) and one or more actual temperatures (52), particularly using a Nastran analysis (250, 350).

4. Coordinate measuring system according to any one of the preceding claims, wherein the control unit
- comprises the computing device; and/or
- is configured to define the measurement path based on the determined deformation of the object (2); and/or
- is configured to adapt the measurement path in real-time based on the determined deformation of the object (2).

5. Coordinate measuring system according to claim 1,
wherein the probe head (17) comprises a contacting temperature sensor configured to approach and contact surface points of the object (2) to measure a temperature at each of the contacted surface points and to generate contact temperature values for each of the surface points, particularly wherein
- the computing device is configured to adjust the temperature data from the at least one temperature sensor using the contact temperature values; and/or
- the contacting temperature sensor is included in a tactile stylus (18) that is used for approaching the plurality of measurement points on the object (2); and/or
- the control unit is configured to control the actuators to move the probe head (17) along the measurement path to approach the plurality of measurement points and the plurality of contacted surface points; and/or
- each feature of the object comprising at least one measurement point also comprises at least one contacted surface point;
- at least one contacted surface point is a measurement point, particularly wherein the plurality of measurement points comprises the plurality of contacted surface points.

6. Coordinate measuring system according to any one of the preceding claims, wherein the at least one temperature sensor is a thermal imaging temperature sensor (5, 5', 5A, 5B) that is configured
- to be directed to a working volume of the coordinate measuring machine, and
- to generate the temperature data in the form of one or more thermal images (25),
wherein the computing device is configured to determine (140) the tempered coordinates based on the thermal images (25),
particularly wherein the thermal imaging temperature sensor is
- attached to one of the frame members (12-16) or to the probe head (17) and movable relative to the base (11); and/or
- configured to determine the actual temperature values continuously and to generate a plurality of sets of temperature data based on the continuously determined actual temperature values, wherein each set of temperature data is provided to the computing unit referenced to a position of the probe head (17).

7. Coordinate measuring system according to any one of the preceding claims, wherein the at least one temperature sensor is configured
- to determine the actual temperature values continuously and to generate a plurality of sets of temperature data based on the continuously determined actual temperature values, wherein each set of temperature data is provided to the computing device in real time, together with a time-stamp, and/or referenced to the measurement data, particularly wherein each set of temperature data comprises one or more thermal images (25), and/or each set of temperature data is provided to the computing device referenced to a position of a probe head (17) of the coordinate measuring machine; and/or
- to determine the actual temperature values synchronously with the generation of the measurement data by the arrangement of sensors, particularly wherein the actual temperature values are determined while the three-dimensional coordinates of the measurement points are determined.

8. Coordinate measuring system according to any one of the preceding claims, wherein the computing device is configured
- to determine (130) a deformation of the object (2) based on the provided temperature data and on the expansion coefficients, the deformation being in relation to a condition of the same object having the pre-defined temperature (51), particularly wherein determining (140) the tempered coordinates is based on the determined 3D coordinates and on the determined (130) deformation; and/or
- to determine (150), based on the tempered coordinates, deviations of the object (2) at the defined temperature (51) from the nominal dimension data (26); and/or
- to use artificial intelligence to enhance temperature data provided by the at least one temperature sensor to obtain enhanced temperature data, wherein the tempered coordinates are determined (140) also based on the enhanced temperature data, particularly wherein the provided temperature data comprises a sparse point cloud and the enhanced temperature data comprises a dense point cloud, and/or the provided temperature data comprises gaps and enhancing comprises filling the gaps.

9. Coordinate measuring system according to any one of the preceding claims, comprising at least one attachable temperature sensor (6) configured to be attached to surface points of the object (2) to measure a temperature at the surface points and to generate contact temperature values for the surface points, particularly wherein
- the computing device is configured to adjust the temperature data from the at least one temperature sensor using the contact temperature values, and/or
- the attachable temperature sensor (6) is connected with the computing device by means of a cable and/or a wireless data connection.

10. Coordinate measuring system according to claim 5 or claim 9, wherein
- the at least one temperature sensor is configured to determine (120) the one or more actual temperature values (52) of the object (2) by means of infrared measurement, particularly wherein the at least one temperature sensor is a thermal imaging temperature sensor (5, 5', 5A, 5B); and
- the contact temperature values for the surface points are used to calibrate or correct the one or more actual temperature values (52) of the object (2) measured by the at least one temperature sensor, particularly wherein
- the surface points are defined for determining an emissivity of the related surface, wherein defining the surface points comprises detecting reflective surfaces on the object (2) using the nominal dimension data (26), material information of the object (2) and/or the temperature data from the one or more thermal imaging temperature sensor (5, 5A, 5B); and/or
- the at least one temperature sensor is configured to move relative to the object (2) while determining (120) one or more actual temperature values (52) of the same surface of the object (2) by means of infrared measurement, and the computing device is configured to determine an emissivity and/or a reflectivity of said surface and to correct, based on the determined emissivity and/or reflectivity, one or more actual temperature values (52) on said surface using the contact temperature values.

11. Method (100) for determining three-dimensional coordinates of an object (2), particularly using a coordinate measuring system according to any one of the preceding claims, the method comprising
- measuring (110) three-dimensional coordinates of an object (2) using a coordinate measuring machine (1), wherein, during the measurement, one or more actual temperatures (52) of the object (2) deviate from a pre-defined temperature (51);
- measuring (120) the one or more actual temperatures (52) of the object (2) using at least one temperature sensor (5, 5A, 5B); and
- determining (140), using a computing device and based on the measured three-dimensional coordinates, on the measured one or more actual temperatures and on one or more expansion coefficients of the object (2), tempered coordinates of the object, wherein the tempered coordinates are three-dimensional coordinates that the object (2) would have at a tempered state in which the object uniformly has the pre-defined temperature (51),
wherein
- a position and orientation of the object (2) are fixed on a base (11) of the coordinate measuring machine (1) by one or more fixations (19), and
**characterized in that**
- expansion coefficients of the fixations (19) are known and are considered by the computing device for determining (140) the tempered coordinates.

12. Method (100) according to claim 11, wherein determining (140) the tempered coordinates of the object comprises
- obtaining (230, 330) measurement point coordinates of one or more measurement points (21) to be measured by the coordinate measuring machine;
- identifying (240, 340), in a numerical simulation model of the object (2), one or more neighbouring nodes (29) for each of the one or more measurement points (21),
- determining a node-based displacement vector for each neighbouring node (29);
- applying, to each of the one or more measurement points (21),
- the node-based displacement vector of one neighbouring node (29), particularly of the neighbouring node having the shortest distance to the measurement point, or
- an interpolated displacement vector calculated from the node-based displacement vectors of a plurality of neighbouring nodes (29),
to generate temperature correction information for each of the one or more measurement points (21), particularly wherein
- the temperature correction information comprises temperature-corrected three-dimensional coordinates, and for determining (140) the tempered coordinates of the object, the three-dimensional coordinates of the object (2) are measured (110) at the temperature-corrected three-dimensional coordinates;
- determining (140) the tempered coordinates of the object comprises correcting three-dimensional coordinates of the one or more measured measurement points (21) using the temperature correction information; and/or
- determining the node-based displacement vector comprises using a Finite Element temperature simulation to calculate an elongation value for a difference between the pre-defined temperature (51) and one or more actual temperatures (52), particularly using a Nastran analysis (250, 350); and/or
- using artificial intelligence to enhance temperature data provided by the at least one temperature sensor to obtain enhanced temperature data, wherein the tempered coordinates are determined (140) also based on the enhanced temperature data, particularly wherein the provided temperature data comprises a sparse point cloud and the enhanced temperature data comprises a dense point cloud, and/or the provided temperature data comprises gaps and enhancing comprises filling the gaps.

13. Method (100) according to claim 11 or claim 12, comprising determining (130) a deformation of the object (2) based on the provided temperature data and on the expansion coefficients, the deformation being in relation to a condition of the same object having the pre-defined temperature (51), particularly wherein
- determining (140) the tempered coordinates is based on the measured three-dimensional coordinates and on the determined deformation;
- a measurement path for a probe head (17) of the coordinate measuring machine (1) is defined based on the determined (130) deformation of the object (2); and/or
- a measurement path for a probe head (17) of the coordinate measuring machine (1) is adapted in real-time based on the determined (130) deformation of the object (2).

## Patentansprüche

1. Koordinatenmesssystem zum Bestimmen dreidimensionaler Koordinaten eines Objekts (2), umfassend
- eine Koordinatenmessmaschine (1), umfassend eine Anordnung von Sensoren, die dazu konfiguriert ist, Messdaten zu erzeugen, aus denen dreidimensionale Koordinaten mindestens eines Messpunkts auf dem Objekt (2) ableitbar sind, insbesondere wobei die Anordnung von Sensoren Distanzsensoren und/oder Positions- oder Winkelcodierer umfasst; und
- eine Computervorrichtung, die dazu konfiguriert ist, basierend auf den Messdaten, dreidimensionale Koordinaten der Messpunkte zu bestimmen, und zum Speichern von Nenndaten (26, 27) des Objekts (2) in einem Datenspeicher konfiguriert ist, wobei die Nenndaten Nennabmessungsdaten (26) des Objekts (2) für eine vordefinierte Temperatur (51) umfassen,
wobei die Koordinatenmessmaschine (1) Folgendes umfasst:
- eine Basis (11);
- einen Sondenkopf (17);
- eine Rahmenstruktur, umfassend eine Vielzahl von Rahmenelementen (12-16) und ein oder mehrere Stellglieder;
- eine Steuereinheit, die dazu konfiguriert ist, die Stellglieder dazu zu steuern, den Sondenkopf (17) entlang eines Messpfads zu bewegen, um sich einer Vielzahl von Messpunkten auf dem Objekt (2) anzunähern; und
- eine oder mehrere Fixierungen (19), die dazu konfiguriert sind, eine Position und eine Ausrichtung des Objekts (2) auf der Basis (11) zu fixieren,
wobei die Rahmenelemente (12-16) dazu angeordnet sind, den Sondenkopf (17) bewegbar mit der Basis (11) zu verbinden, sodass sich der Sondenkopf (17) einem Objekt (2) annähern kann, das auf der Basis (11) positioniert ist, wobei die Bewegbarkeit des Sondenkopfs (17) ein Arbeitsvolumen der Koordinatenmessmaschine (1) definiert,
wobei
- die Nenndaten einen oder mehrere Ausdehnungskoeffizienten des Objekts (2) umfassen;
- das Koordinatenmesssystem mindestens einen Temperatursensor umfasst, der dazu konfiguriert ist, einen oder mehrere tatsächliche Temperaturwerte (52) des Objekts (2), insbesondere eine tatsächliche Temperaturverteilung auf mindestens einem Teil des Objekts (2), zu bestimmen (120),
- der mindestens eine Temperatursensor dazu konfiguriert ist, Temperaturdaten basierend auf den bestimmten tatsächlichen Temperaturwerten zu erzeugen und die Temperaturdaten an die Computervorrichtung bereitzustellen; und
- die Computervorrichtung dazu konfiguriert ist, basierend auf den bestimmten dreidimensionalen Koordinaten der Messpunkte, auf den bereitgestellten Temperaturdaten und auf den Ausdehnungskoeffizienten temperierte Koordinaten des Objekts zu bestimmen (140),
wobei die bestimmten (120) tatsächlichen Temperaturwerte des Objekts (2) von der vordefinierten Temperatur (51) abweichen und die temperierten Koordinaten dreidimensionale Koordinaten sind, die das Objekt (2) in einem temperierten Zustand aufweisen würde, in dem das Objekt die vordefinierte Temperatur (51) gleichförmig aufweist,
**dadurch gekennzeichnet, dass**
Ausdehnungskoeffizienten der Fixierungen (19) bekannt sind und durch die Computervorrichtung zum Bestimmen (140) der temperierten Koordinaten berücksichtigt werden.

2. Koordinatenmesssystem nach Anspruch 1, wobei das Bestimmen (140) der temperierten Koordinaten des Objekts Folgendes umfasst:
- Erlangen (230, 330) von Messpunktkoordinaten eines oder mehrerer durch die Koordinatenmessmaschine zu messender Messpunkte (21);
- Identifizieren (240, 340), in einem numerischen Simulationsmodell des Objekts (2), eines oder mehrerer Nachbarknoten (29) für jeden des einen oder der mehreren Messpunkte (21),
- Bestimmen eines knotenbasierten Verschiebungsvektors für jeden Nachbarknoten (29);
- Anwenden, auf jeden des einen oder der mehreren Messpunkte (21),
- des knotenbasierten Verschiebungsvektors eines Nachbarknotens (29), insbesondere des Nachbarknotens, der die kürzeste Distanz zu dem Messpunkt aufweist, oder
- eines interpolierten Verschiebungsvektors, der aus den knotenbasierten Verschiebungsvektoren einer Vielzahl von Nachbarknoten (29) berechnet wird,
um Temperaturkorrekturinformationen für jeden des einen oder der mehreren Messpunkte (21) zu erzeugen,
insbesondere wobei die Temperaturkorrekturinformationen temperaturkorrigierte dreidimensionale Koordinaten umfassen und die Computervorrichtung zum Bestimmen (140) der temperierten Koordinaten des Objekts dazu konfiguriert ist, die temperaturkorrigierten dreidimensionalen Koordinaten an die Koordinatenmessmaschine (1) bereitzustellen, um eine Messung des einen oder der mehreren Messpunkte (21) auf den temperaturkorrigierten dreidimensionalen Koordinaten zu bewirken.

3. Koordinatenmesssystem nach Anspruch 2, wobei
- das Bestimmen (140) der temperierten Koordinaten des Objekts Korrigieren dreidimensionaler Koordinaten des einen oder der mehreren Messpunkte (21), die durch die Koordinatenmessmaschine (1) gemessen werden, unter Verwendung der Temperaturkorrekturinformationen umfasst; und/oder
- das Bestimmen des knotenbasierten Verschiebungsvektors Verwenden einer numerischen Temperatursimulation umfasst, um einen Elongationswert für eine Differenz zwischen der vordefinierten Temperatur (51) und einer oder mehreren tatsächlichen Temperaturen (52), insbesondere unter Verwendung einer Nastran-Analyse (250, 350), zu berechnen.

4. Koordinatenmesssystem nach einem der vorhergehenden Ansprüche, wobei die Steuereinheit
- die Computervorrichtung umfasst; und/oder
- dazu konfiguriert ist, den Messpfad basierend auf der bestimmten Verformung des Objekts (2) zu definieren; und/oder
- dazu konfiguriert ist, den Messpfad in Echtzeit basierend auf der bestimmten Verformung des Objekts (2) anzupassen.

5. Koordinatenmesssystem nach Anspruch 1,
wobei der Sondenkopf (17) einen kontaktierenden Temperatursensor umfasst, der dazu konfiguriert ist, sich Oberflächenpunkten des Objekts (2) anzunähern und sie zu kontaktieren, um eine Temperatur an jedem der kontaktierten Oberflächenpunkte zu messen und Kontakttemperaturwerte für jeden der Oberflächenpunkte zu erzeugen, insbesondere wobei
- die Computervorrichtung dazu konfiguriert ist, die Temperaturdaten von dem mindestens einen Temperatursensor unter Verwendung der Kontakttemperaturwerte anzupassen; und/oder
- der kontaktierende Temperatursensor in einer taktilen Nadel (18) beinhaltet ist, die zum Annähern der Vielzahl von Messpunkten auf dem Objekt (2) verwendet wird; und/oder
- die Steuereinheit dazu konfiguriert ist, die Stellglieder dazu zu steuern, den Sondenkopf (17) entlang des Messpfads zu bewegen, um sich der Vielzahl von Messpunkten und der Vielzahl kontaktierter Oberflächenpunkte anzunähern; und/oder
- jedes Merkmal des Objekts, umfassend mindestens einen Messpunkt, ebenfalls mindestens einen kontaktierten Oberflächenpunkt umfasst;
- mindestens ein kontaktierter Oberflächenpunkt ein Messpunkt ist, insbesondere wobei die Vielzahl von Messpunkten die Vielzahl kontaktierter Oberflächenpunkte umfasst.

6. Koordinatenmesssystem nach einem der vorhergehenden Ansprüche, wobei der mindestens eine Temperatursensor ein Wärmebildgebungstemperatursensor (5, 5', 5A, 5B) ist, der dazu konfiguriert ist,
- auf ein Arbeitsvolumen der Koordinatenmessmaschine gerichtet zu werden und
- die Temperaturdaten in Form eines oder mehrerer Wärmebilder (25) zu erzeugen,
wobei die Computervorrichtung dazu konfiguriert ist, die temperierten Koordinaten basierend auf den Wärmebildern (25) zu bestimmen (140),
insbesondere wobei der Wärmebildgebungstemperatursensor
- an einem der Rahmenelemente (12-16) oder an dem Sondenkopf (17) befestigt und in Bezug auf die Basis (11) bewegbar ist; und/oder
- dazu konfiguriert ist, die tatsächlichen Temperaturwerte kontinuierlich zu bestimmen und eine Vielzahl von Sätzen von Temperaturdaten basierend auf den kontinuierlich bestimmten tatsächlichen Temperaturwerten zu erzeugen, wobei jeder Satz von Temperaturdaten mit Verweis auf eine Position des Sondenkopfs (17) an die Computereinheit bereitgestellt wird.

7. Koordinatenmesssystem nach einem der vorhergehenden Ansprüche, wobei der mindestens eine Temperatursensor dazu konfiguriert ist,
- die tatsächlichen Temperaturwerte kontinuierlich zu bestimmen und eine Vielzahl von Sätzen von Temperaturdaten basierend auf den kontinuierlich bestimmten tatsächlichen Temperaturwerten zu erzeugen, wobei jeder Satz von Temperaturdaten in Echtzeit zusammen mit einem Zeitstempel und/oder mit Verweis auf die Messdaten an die Computervorrichtung bereitgestellt wird, insbesondere wobei jeder Satz von Temperaturdaten ein oder mehrere Wärmebilder (25) umfasst und/oder jeder Satz von Temperaturdaten mit Verweis auf eine Position eines Sondenkopfs (17) der Koordinatenmessmaschine an die Computervorrichtung bereitgestellt wird; und/oder
- die tatsächlichen Temperaturwerte synchron mit der Erzeugung der Messdaten durch die Anordnung von Sensoren zu bestimmen, insbesondere wobei die tatsächlichen Temperaturwerte bestimmt werden, während die dreidimensionalen Koordinaten der Messpunkte bestimmt werden.

8. Koordinatenmesssystem nach einem der vorhergehenden Ansprüche, wobei die Computervorrichtung dazu konfiguriert ist,
- eine Verformung des Objekts (2) basierend auf den bereitgestellten Temperaturdaten und auf den Ausdehnungskoeffizienten zu bestimmen (130), wobei sich die Verformung auf eine Bedingung bezieht, dass das gleiche Objekt die vordefinierte Temperatur (51) aufweist, insbesondere wobei das Bestimmen (140) der temperierten Koordinaten auf den bestimmten 3D-Koordinaten und auf der bestimmten (130) Verformung basiert; und/oder
- basierend auf den temperierten Koordinaten Abweichungen des Objekts (2) bei der definierten Temperatur (51) von den Nennabmessungsdaten (26) zu bestimmen (150); und/oder
- künstliche Intelligenz zu verwenden, um Temperaturdaten, die durch den mindestens einen Temperatursensor bereitgestellt werden, zu verbessern, um verbesserte Temperaturdaten zu erlangen, wobei die temperierten Koordinaten ebenfalls basierend auf den verbesserten Temperaturdaten bestimmt (140) werden, insbesondere wobei die bereitgestellten Temperaturdaten eine dünn besetzte Punktwolke umfassen und die verbesserten Temperaturdaten eine dicht besetzte Punktwolke umfassen und/oder die bereitgestellten Temperaturdaten Lücken umfassen und das Verbessern Füllen der Lücken umfasst.

9. Koordinatenmesssystem nach einem der vorhergehenden Ansprüche, umfassend mindestens einen befestigbaren Temperatursensor (6), der dazu konfiguriert ist, an Oberflächenpunkten des Objekts (2) befestigt zu werden, um eine Temperatur an den Oberflächenpunkten zu messen und Kontakttemperaturwerte für die Oberflächenpunkte zu erzeugen, insbesondere wobei
- die Computervorrichtung dazu konfiguriert ist, die Temperaturdaten von dem mindestens einen Temperatursensor unter Verwendung der Kontakttemperaturwerte anzupassen, und/oder
- der befestigbare Temperatursensor (6) mittels eines Kabels und/oder einer drahtlosen Datenverbindung mit der Computervorrichtung verbunden ist.

10. Koordinatenmesssystem nach Anspruch 5 oder Anspruch 9, wobei
- der mindestens eine Temperatursensor dazu konfiguriert ist, den einen oder die mehreren tatsächlichen Temperaturwerte (52) des Objekts (2) mittels einer Infrarotmessung zu bestimmen (120), insbesondere wobei der mindestens eine Temperatursensor ein Wärmebildgebungstemperatursensor (5, 5', 5A, 5B) ist; und
- die Kontakttemperaturwerte für die Oberflächenpunkte dazu verwendet werden, den einen oder die mehreren tatsächlichen Temperaturwerte (52) des Objekts (2), die durch den mindestens einen Temperatursensor gemessen werden, zu kalibrieren oder zu korrigieren,
insbesondere wobei
- die Oberflächenpunkte zum Bestimmen eines Emissionsvermögens der bezogenen Oberfläche definiert werden, wobei das Definieren der Oberflächenpunkte Detektieren reflektiver Oberflächen an dem Objekt (2) unter Verwendung der Nennabmessungsdaten (26), von Materialinformationsdaten des Objekts (2) und/oder der Temperaturdaten von dem einen oder den mehreren Wärmebildgebungstemperatursensoren (5, 5', 5A, 5B) umfasst; und/oder
- der mindestens eine Temperatursensor dazu konfiguriert ist, sich in Bezug auf das Objekt (2) zu bewegen, während er einen oder mehrere tatsächliche Temperaturwerte (52) der gleichen Oberfläche des Objekts (2) mittels der Infrarotmessung bestimmt (120), und die Computervorrichtung dazu konfiguriert ist, ein Emissionsvermögen und/oder eine Reflektivität der Oberfläche zu bestimmen und basierend auf dem bestimmten Emissionsvermögen und/oder der bestimmten Reflektivität einen oder mehrere tatsächliche Temperaturwerte (52) an der Oberfläche unter Verwendung der Kontakttemperaturwerte zu korrigieren.

11. Verfahren (100) zum Bestimmen dreidimensionaler Koordinaten eines Objekts (2), insbesondere unter Verwendung eines Koordinatenmesssystems nach einem der vorhergehenden Ansprüche, wobei das Verfahren Folgendes umfasst:
- Messen (110) dreidimensionaler Koordinaten eines Objekts (2) unter Verwendung einer Koordinatenmessmaschine (1), wobei während der Messung eine oder mehrere tatsächliche Temperaturen (52) des Objekts (2) von einer vordefinierten Temperatur (51) abweichen;
- Messen (120) der einen oder der mehreren tatsächlichen Temperaturen (52) des Objekts (2) unter Verwendung mindestens eines Temperatursensors (5, 5A, 5B); und
- Bestimmen (140), unter Verwendung einer Computervorrichtung und basierend auf den gemessenen dreidimensionalen Koordinaten, auf der gemessenen einen oder den gemessenen mehreren tatsächlichen Temperaturen und auf einem oder mehreren Ausdehnungskoeffizienten des Objekts (2), temperierter Koordinaten des Objekts, wobei die temperierten Koordinaten dreidimensionale Koordinaten sind, die das Objekt (2) in einem temperierten Zustand aufweisen würde, in dem das Objekt die vordefinierte Temperatur (51) gleichförmig aufweist,
wobei
- eine Position und eine Ausrichtung des Objekts (2) durch eine oder mehrere Fixierungen (19) auf einer Basis (11) der Koordinatenmessmaschine (1) fixiert sind, und **dadurch gekennzeichnet, dass**
- Ausdehnungskoeffizienten der Fixierungen (19) bekannt sind und durch die Computervorrichtung zum Bestimmen (140) der temperierten Koordinaten berücksichtigt werden.

12. Verfahren (100) nach Anspruch 11, wobei das Bestimmen (140) der temperierten Koordinaten des Objekts Folgendes umfasst:
- Erlangen (230, 330) von Messpunktkoordinaten eines oder mehrerer durch die Koordinatenmessmaschine zu messender Messpunkte (21);
- Identifizieren (240, 340), in einem numerischen Simulationsmodell des Objekts (2), eines oder mehrerer Nachbarknoten (29) für jeden des einen oder der mehreren Messpunkte (21),
- Bestimmen eines knotenbasierten Verschiebungsvektors für jeden Nachbarknoten (29);
- Anwenden, auf jeden des einen oder der mehreren Messpunkte (21),
- des knotenbasierten Verschiebungsvektors eines Nachbarknotens (29), insbesondere des Nachbarknotens, der die kürzeste Distanz zu dem Messpunkt aufweist, oder
- eines interpolierten Verschiebungsvektors, der aus den knotenbasierten Verschiebungsvektoren einer Vielzahl von Nachbarknoten (29) berechnet wird,
um Temperaturkorrekturinformationen für jeden des einen oder der mehreren Messpunkte (21) zu erzeugen,
insbesondere wobei
- die Temperaturkorrekturinformationen temperaturkorrigierte dreidimensionale Koordinaten umfassen und, zum Bestimmen (140) der temperierten Koordinaten des Objekts, die dreidimensionalen Koordinaten des Objekts (2) auf den temperaturkorrigierten dreidimensionalen Koordinaten gemessen (110) werden;
- das Bestimmen (140) der temperierten Koordinaten des Objekts Korrigieren dreidimensionaler Koordinaten des einen oder der mehreren gemessenen Messpunkte (21) unter Verwendung der Temperaturkorrekturinformationen umfasst; und/oder
- das Bestimmen des knotenbasierten Verschiebungsvektors Verwenden einer Finite-Elemente-Temperatursimulation umfasst, um einen Elongationswert für eine Differenz zwischen der vordefinierten Temperatur (51) und einer oder mehreren tatsächlichen Temperaturen (52) zu berechnen,
insbesondere unter Verwendung einer Nastran-Analyse (250, 350); und/oder
- Verwenden künstlicher Intelligenz, um Temperaturdaten, die durch den mindestens einen Temperatursensor bereitgestellt werden, zu verbessern, um verbesserte Temperaturdaten zu erlangen, wobei die temperierten Koordinaten ebenfalls basierend auf den verbesserten Temperaturdaten bestimmt (140) werden, insbesondere wobei die bereitgestellten Temperaturdaten eine dünn besetzte Punktwolke umfassen und die verbesserten Temperaturdaten eine dicht besetzte Punktwolke umfassen und/oder die bereitgestellten Temperaturdaten Lücken aufweisen und das Verbessern Füllen der Lücken umfasst.

13. Verfahren (100) nach Anspruch 11 oder Anspruch 12, umfassend Bestimmen (130) einer Verformung des Objekts (2) basierend auf den bereitgestellten Temperaturdaten und auf den Ausdehnungskoeffizienten, wobei sich die Verformung auf eine Bedingung bezieht, dass das gleiche Objekt die vordefinierte Temperatur (51) aufweist, insbesondere wobei
- das Bestimmen (140) der temperierten Koordinaten auf den gemessenen dreidimensionalen Koordinaten und auf der bestimmten Verformung basiert;
- ein Messpfad für einen Sondenkopf (17) der Koordinatenmessmaschine (1) basierend auf der bestimmten (130) Verformung des Objekts (2) definiert wird; und/oder
- ein Messpfad für einen Sondenkopf (17) der Koordinatenmessmaschine (1) in Echtzeit basierend auf der bestimmten (130) Verformung des Objekts (2) angepasst wird.

## Revendications

1. Système de mesure de coordonnées destiné à déterminer des coordonnées tridimensionnelles d'un objet (2), comprenant :
- une machine de mesure de coordonnées (1) comprenant un ensemble de capteurs conçu pour générer des données de mesure dont il est possible de déduire les coordonnées tridimensionnelles d'au moins un point de mesure sur l'objet (2), ledit ensemble de capteurs comprenant notamment des capteurs de distance et/ou des codeurs de position ou d'angle, et
- un dispositif informatique conçu pour déterminer, compte tenu des données de mesure, les coordonnées tridimensionnelles des points de mesure et pour mettre en mémoire des données nominales (26, 27) de l'objet (2), lesdites données nominales comprenant des données de dimensions nominales (26) de l'objet (2) à une température prédéfinie (51) ;
ladite machine de mesure de coordonnées (1) comprenant :
- une base (11),
- une tête de sonde (17),
- une structure formant portique comprenant une pluralité d'éléments de portique (12-16) et un ou plusieurs actionneurs,
- une unité de commande conçue pour commander les actionneurs pour déplacer la tête de sonde (17) le long d'un chemin de mesure de façon qu'elle approche une pluralité de points de mesure sur l'objet (2), et
- une ou plusieurs fixations (19) conçues pour fixer la position et l'orientation de l'objet (2) sur la base (11) ;
lesdits éléments de portique (12-16) étant disposés pour raccorder la tête de sonde (17) à ladite base (11) de manière mobile, de façon que ladite tête de sonde (17) puisse approcher un objet (2) positionné sur ladite base (11), la mobilité de ladite tête de sonde (17) définissant un volume de travail de ladite machine de mesure de coordonnées (1) ;
et dans lequel
- les données nominales comprennent un ou plusieurs coefficients de dilatation de l'objet (2),
- le système de mesure de coordonnées comprend au moins un capteur de température conçu pour déterminer (120) une ou plusieurs valeurs de température réelle (52) de l'objet (2), notamment une distribution de températures réelles sur au moins une partie de l'objet (2),
- l'au moins un capteur de température est conçu pour générer des données de température compte tenu des valeurs de température réelle déterminées et pour fournir lesdites données de température au dispositif informatique, et
- le dispositif informatique est conçu pour déterminer (140) des coordonnées tempérées de l'objet compte tenu des coordonnées tridimensionnelles déterminées des points de mesure, des données de température fournies et des coefficients de dilatation ;
les valeurs de température réelle déterminées (120) de l'objet (2) s'écartant de la température prédéfinie (51), et les coordonnées tempérées étant les coordonnées tridimensionnelles que l'objet (2) aurait dans un état tempéré où ledit objet présenterait uniformément la température prédéfinie (51) ;
**caractérisé en ce que**
les coefficients de dilatation des fixations (19) sont connus et pris en compte par le dispositif informatique dans la détermination (140) des coordonnées tempérées.

2. Système de mesure de coordonnées selon la revendication 1, dans lequel la détermination (140) des coordonnées tempérées de l'objet comprend les étapes suivantes :
- obtention (230, 330) de coordonnées d'un ou de plusieurs points de mesure (21) destinés à être mesurés par la machine de mesure de coordonnées,
- identification (240, 340), dans un modèle de simulation numérique de l'objet (2), d'un ou de plusieurs nœuds voisins (29) du ou des points de mesure (21) respectifs,
- détermination d'un vecteur nodal de déplacement pour chaque nœud voisin (29),
- application au(x) point(s) de mesure (21) respectif(s) :
- dudit vecteur nodal de déplacement d'un nœud voisin (29), notamment du nœud voisin situé à la distance la plus courte du point de mesure, ou
- d'un vecteur de déplacement interpolé calculé à partir des vecteurs nodaux de déplacement d'une pluralité de nœuds voisins (29),
afin de générer des informations de thermocorrection pour le ou les points de mesure (21) respectifs ;
lesdites informations de thermocorrection comprenant notamment des coordonnées tridimensionnelles thermocorrigées et, pour la détermination (140) des coordonnées tempérées de l'objet, le dispositif informatique étant conçu pour fournir les coordonnées tridimensionnelles thermocorrigées à la machine de mesure de coordonnées (1) afin qu'elle effectue la mesure du ou des points de mesure (21) aux coordonnées tridimensionnelles thermocorrigées.

3. Système de mesure de coordonnées selon la revendication 2, dans lequel
- la détermination (140) des coordonnées tempérées de l'objet comprend la correction, au moyen des informations de thermocorrection, des coordonnées tridimensionnelles du ou des points de mesure (21) mesurés par la machine de mesure de coordonnées (1), et/ou
- la détermination du vecteur nodal de déplacement comprend l'utilisation d'une simulation thermique numérique pour calculer une valeur d'allongement lorsque la température prédéfinie (51) est différente d'au moins une température réelle (52), notamment au moyen d'une analyse par Nastran (250, 350).

4. Système de mesure de coordonnées selon l'une quelconque des revendications précédentes, dans lequel l'unité de commande
- comprend le dispositif informatique, et/ou
- est conçue pour définir le chemin de mesure compte tenu de la déformation déterminée de l'objet (2), et/ou
- est conçue pour adapter le chemin de mesure en temps réel compte tenu de la déformation déterminée de l'objet (2).

5. Système de mesure de coordonnées selon la revendication 1, dans lequel la tête de sonde (17) comprend un capteur de température par contact conçu pour approcher et entrer en contact avec des points superficiels de l'objet (2), afin de mesurer une température en chacun des points superficiels contactés et de générer des valeurs de température de contact pour chacun des points superficiels, et notamment dans lequel
- le dispositif informatique est conçu pour ajuster les données de température provenant de l'au moins un capteur de température à l'aide des valeurs de température de contact, et/ou
- le capteur de température par contact est inclus dans un stylet tactile (18) utilisé pour approcher la pluralité de points de mesure sur l'objet (2), et/ou
- l'unité de commande est conçue pour commander les actionneurs pour déplacer la tête de sonde (17) le long du chemin de mesure de façon qu'elle approche la pluralité de points de mesure et la pluralité de points superficiels contactés, et/ou
- chaque partie fonctionnelle de l'objet comprenant au moins un point de mesure comprend également au moins un point superficiel contacté,
- au moins un point superficiel contacté est un point de mesure, la pluralité de points de mesure comprenant notamment la pluralité de points superficiels contactés.

6. Système de mesure de coordonnées selon l'une quelconque des revendications précédentes, dans lequel l'au moins un capteur de température est un imageur thermique (5, 5', 5A, 5B) conçu pour
- être orienté sur un volume de travail de la machine de mesure de coordonnées, et
- générer les données de température sous la forme d'une ou de plusieurs images thermiques (25) ;
ledit dispositif informatique étant conçu pour déterminer (140) les coordonnées tempérées compte tenu des images thermiques (25),
l'imageur thermique étant notamment
- attaché à l'un des éléments de portique (12-16) ou à la tête de sonde (17) et mobile par rapport à la base (11), et/ou
- conçu pour déterminer les valeurs de température réelle en continu et pour générer une pluralité de jeux de données de température compte tenu des valeurs de température réelle déterminées en continu, chaque jeu de données de température étant fourni au dispositif informatique avec référence à une position de la tête de sonde (17).

7. Système de mesure de coordonnées selon l'une quelconque des revendications précédentes, dans lequel l'au moins un capteur de température est conçu pour
- déterminer les valeurs de température réelle en continu et générer une pluralité de jeux de données de température compte tenu des valeurs de température réelle déterminées en continu, chaque jeu de données de température étant fourni au dispositif informatique en temps réel, avec un horodatage, et/ou avec référence aux données de mesure, chaque jeu de données de température comprenant notamment une ou plusieurs images thermiques (25) et/ou chaque jeu de données de température étant fourni au dispositif informatique avec référence à la position d'une tête de sonde (17) de la machine de mesure de coordonnées, et/ou
- déterminer les valeurs de température réelle de manière synchrone avec la génération des données de mesure effectuée par l'ensemble de capteurs, les valeurs de température réelle étant notamment déterminées pendant la détermination des coordonnées tridimensionnelles des points de mesure.

8. Système de mesure de coordonnées selon l'une quelconque des revendications précédentes, dans lequel le dispositif informatique est conçu pour
- déterminer (130) une déformation de l'objet (2) compte tenu des données de température fournies et des coefficients de dilatation, ladite déformation étant liée à l'état du même objet à la température prédéfinie (51), la détermination (140) des coordonnées tempérées tenant compte notamment des coordonnées tridimensionnelles déterminées et de la déformation déterminée (130), et/ou
- déterminer (150), compte tenu des coordonnées tempérées, combien l'objet (2) à la température définie (51) s'écarte des données de dimensions nominales (26), et/ou
- utiliser l'intelligence artificielle pour améliorer les données de température fournies par l'au moins un capteur de température, afin d'obtenir des données de température améliorées, les coordonnées tempérées étant également déterminées (140) compte tenu desdites données de température améliorées, les données de température fournies comprenant notamment un nuage de points clairsemé et les données de température améliorées comprenant un nuage de points dense, et/ou les données de température fournies présentant des manques comblés par l'amélioration.

9. Système de mesure de coordonnées selon l'une quelconque des revendications précédentes, comprenant au moins un capteur de température attachable (6) conçu pour être attaché à des points superficiels de l'objet (2) afin de mesurer une température aux points superficiels et de générer des valeurs de température de contact pour les points superficiels, et notamment dans lequel
- le dispositif informatique est conçu pour ajuster les données de température provenant de l'au moins un capteur de température à l'aide des valeurs de température de contact, et/ou
- le capteur de température attachable (6) est relié au dispositif informatique au moyen d'un câble et/ou d'une connexion de données sans fil.

10. Système de mesure de coordonnées selon la revendication 5 ou 9, dans lequel
- l'au moins un capteur de température est conçu pour déterminer (120) la ou les valeurs de température réelle (52) de l'objet (2) au moyen de mesures infrarouge, ledit au moins un capteur de température étant notamment un imageur thermique (5, 5', 5A, 5B), et
- les valeurs de température de contact aux points superficiels sont utilisés pour étalonner ou corriger la ou les valeurs de température réelle (52) de l'objet (2) mesurées par ledit au moins un capteur de température ;
dans lequel système notamment
- les points superficiels sont définis afin de déterminer une émissivité de la surface associée, la définition desdits points superficiels comprenant la détection de surfaces réfléchissantes de l'objet (2) au moyen des données de dimensions nominales (26), d'informations sur le matériau de l'objet (2) et/ou des données de température provenant du ou des imageurs thermiques (5, 5', 5A, 5B), et/ou
- ledit au moins un capteur de température est conçu pour se déplacer par rapport à l'objet (2) pendant la détermination (120) d'une ou de plusieurs valeurs de température réelle (52) de la même surface de l'objet (2) au moyen de mesures infrarouge, et le dispositif informatique est conçu pour déterminer une émissivité et/ou une réflectivité de ladite surface et pour corriger, compte tenu de l'émissivité et/ou de la réflectivité déterminées, une ou plusieurs valeurs de température réelle (52) sur ladite surface à l'aide des valeurs de température de contact.

11. Procédé (100) visant à déterminer des coordonnées tridimensionnelles d'un objet (2), notamment au moyen d'un système de mesure de coordonnées selon l'une quelconque des revendications précédentes, ledit procédé comprenant les étapes suivantes :
- mesure (110) de coordonnées tridimensionnelles d'un objet (2) au moyen d'une machine de mesure de coordonnées (1), une ou plusieurs températures réelles (52) de l'objet (2) s'écartant notamment d'une température prédéfinie (51) pendant ladite mesure,
- mesure (120) de la ou des températures réelles (52) de l'objet (2) au moyen d'au moins un capteur de température (5, 5A, 5B), et
- détermination (140) de coordonnées tempérées de l'objet au moyen d'un dispositif informatique et compte tenu des coordonnées tridimensionnelles mesurées, de la ou des températures réelles mesurées et d'un ou plusieurs coefficients de dilatation de l'objet (2), lesdites coordonnées tempérées étant des coordonnées tridimensionnelles que l'objet (2) aurait dans un état tempéré où ledit objet présenterait uniformément la température prédéfinie (51) ;
dans lequel
- la position et l'orientation de l'objet (2) sont fixées sur une base (11) de la machine de mesure de coordonnées (1) par une ou plusieurs fixations (19), et
**caractérisé en ce que**
les coefficients de dilatation des fixations (19) sont connus et pris en compte par le dispositif informatique dans la détermination (140) des coordonnées tempérées.

12. Procédé (100) selon la revendication 11, dans lequel la détermination (140) des coordonnées tempérées de l'objet comprend les étapes suivantes :
- obtention (230, 330) de coordonnées d'un ou de plusieurs points de mesure (21) destinés à être mesurés par la machine de mesure de coordonnées,
- identification (240, 340), dans un modèle de simulation numérique de l'objet (2), d'un ou de plusieurs nœuds voisins (29) du ou des points de mesure (21) respectifs,
- détermination d'un vecteur nodal de déplacement pour chaque nœud voisin (29),
- application au(x) point(s) de mesure (21) respectif(s) :
- dudit vecteur nodal de déplacement d'un nœud voisin (29), notamment du nœud voisin situé à la distance la plus courte du point de mesure, ou
- d'un vecteur de déplacement interpolé calculé à partir des vecteurs nodaux de déplacement d'une pluralité de nœuds voisins (29),
afin de générer des informations de thermocorrection pour le ou les points de mesure (21) respectifs ;
dans lequel procédé notamment
- les informations de thermocorrection comprennent des coordonnées tridimensionnelles thermocorrigées et, pour la détermination (140) des coordonnées tempérées de l'objet, les coordonnées tridimensionnelles de l'objet (2) sont mesurées (110) aux coordonnées tridimensionnelles thermocorrigées,
- la détermination (140) des coordonnées tempérées de l'objet comprend la correction, au moyen des informations de thermocorrection, des coordonnées tridimensionnelles du ou des points de mesure (21) mesurés, et/ou
- la détermination du vecteur nodal de déplacement comprend l'utilisation d'une simulation thermique par éléments finis pour calculer une valeur d'allongement lorsque la température prédéfinie (51) est différente d'au moins une température réelle (52), notamment au moyen d'une analyse par Nastran (250, 350), et/ou
- l'utilisation de l'intelligence artificielle pour améliorer les données de température fournies par l'au moins un capteur de température, afin d'obtenir des données de température améliorées, les coordonnées tempérées étant également déterminées (140) compte tenu desdites données de température améliorées, les données de température fournies comprenant notamment un nuage de points clairsemé et les données de température améliorées comprenant un nuage de points dense, et/ou les données de température fournies présentant des manques comblés par l'amélioration.

13. Procédé (100) selon la revendication 11 ou 12, comprenant la détermination (130) d'une déformation de l'objet (2) compte tenu des données de température fournies et des coefficients de dilatation, ladite déformation étant liée à l'état du même objet à la température prédéfinie (51), et notamment dans lequel
- la détermination (140) des coordonnées tempérées tient compte des coordonnées tridimensionnelles mesurées et de la déformation déterminée,
- un chemin de mesure pour une tête de sonde (17) de la machine de mesure de coordonnées (1) est défini compte tenu de la déformation déterminée (130) de l'objet (2), et/ou
- un chemin de mesure pour une tête de sonde (17) de la machine de mesure de coordonnées (1) est adapté en temps réel compte tenu de la déformation déterminée (130) de l'objet (2).
